# EUROPEAN PATENT APPLICATION

(11) **EP 4 826 615 A1**
(43) Date of publication of application: **21.10.2026**
(21) Application number: 24910154.4
(22) Date of filing: 14.10.2024
(51) Int. Cl.: G06Q 10/0633

(54) **PROCESS OPTIMIZATION METHOD AND APPARATUS, AND DEVICE**

(30) Priority: 28.12.2023 CN 202311855810
(71) Applicant: Huawei Technologies Co., Ltd., Shenzhen, Guangdong 518129 (CN)
(72) Inventor: FENG, Junhui, Shenzhen, Guangdong 518129 (CN); XIAN, Xiaogang, Shenzhen, Guangdong 518129 (CN); LI, Deshu, Shenzhen, Guangdong 518129 (CN); WANG, Kun, Shenzhen, Guangdong 518129 (CN); PENG, Yunfeng, Shenzhen, Guangdong 518129 (CN)
(74) Representative: Maiwald GmbH
(86) International application number: PCT/CN2024/124819
(87) International publication number: WO 2025/139212

(57) **Abstract**

This application provides a flow optimization method and apparatus, and a device. An apparatus in which a flow optimization module is located determines a to-be-optimized target sub-IVR flow from sub-IVR flows based on a value of a service parameter of each sub-IVR flow and a reference value of the service parameter; when optimizing the target sub-IVR flow, determines, from a plurality of nodes included in the target sub-IVR flow, a target node associated with the service parameter; selects, from an optimization solution set, a target optimization solution for optimizing the target node; and optimizes the target sub-IVR flow by optimizing the target node in the target sub-IVR flow based on the target optimization solution. Because the target node is a node associated with the service parameter, optimizing the target node can improve a value of a service parameter of an optimized target sub-IVR flow to the greatest extent, to quickly and conveniently optimize an IVR flow.

## Description

### CROSS-REFERENCE TO RELATED APPLICATIONS

This application claims priority to Chinese Patent Application No. 202311855810.0, filed with the China National Intellectual Property Administration on December 28, 2023 and entitled "FLOW OPTIMIZATION METHOD AND APPARATUS, AND DEVICE", which is incorporated herein by reference in its entirety.

### TECHNICAL FIELD

This application relates to the field of data processing technologies, and in particular, to a flow optimization method and apparatus, and a device.

### BACKGROUND

A self-service flow, also referred to as interactive voice response (Interactive Voice Response, IVR), is a self service provided by an enterprise call center for a customer and plays an important role in an operation of the enterprise call center. Optimization of a service flow in the IVR (for ease of description, referred to as an IVR flow below) is a key task of operation management personnel of the enterprise call center, and is an important part of improving operation efficiency of an enterprise call center system.

In a related technology, when optimizing the IVR flow, the operation management personnel generally need to manually analyze a service indicator collected using a report statistical tool and manually summarize an optimization solution of the IVR flow. However, this manner needs to be performed manually, and consequently, efficiency is low, and labor costs are also high. Therefore, a technical solution that can quickly and conveniently optimize the IVR flow is urgently needed.

### SUMMARY

Embodiments of this application provide a flow optimization method and apparatus, and a device, to quickly and conveniently optimize an IVR flow.

According to a first aspect, an embodiment of this application provides a flow optimization method. The method may be performed by an apparatus in which a flow optimization module is located. In the method,
the apparatus in which the flow optimization module is located may obtain a value of a service parameter of each sub-IVR flow, and determine, from the sub-IVR flows based on a difference between the value of the service parameter of each sub-IVR flow and a reference value corresponding to the service parameter, a to-be-optimized target sub-IVR flow; when optimizing the target sub-IVR flow, determine, from a plurality of nodes included in the target sub-IVR flow, a target node associated with the service parameter; and select, from an optimization solution set, a target optimization solution that may be used for optimizing the target node, to optimize the target sub-IVR flow.

In the foregoing manner, the apparatus in which the flow optimization module is located may intelligently determine the to-be-optimized target sub-IVR flow from the sub-IVR flows based on the value of the service parameter of each sub-IVR flow and the reference value of the service parameter. When optimizing the to-be-optimized target sub-IVR flow, the apparatus in which the flow optimization module is located may first determine, from the plurality of nodes included in the target sub-IVR flow, the target node associated with the service parameter, select, from the optimization solution set, the target optimization solution that may be for optimizing the target node, and optimize the target sub-IVR flow by optimizing the target node in the target sub-IVR flow based on the target optimization solution. Because the determined target node is a node associated with the service parameter, optimizing the target node can improve a value of a service parameter of an optimized target sub-IVR flow to the greatest extent, to achieve an objective of quickly and conveniently optimizing the IVR flow.

In a possible implementation, when determining, from the plurality of nodes included in the target sub-IVR flow, the target node associated with the service parameter, the apparatus in which the flow optimization module is located may determine, based on a pre-obtained association relationship between a service parameter of a sub-IVR flow and an indicator parameter of a node, the target node associated with the service parameter in the plurality of nodes included in the target sub-IVR flow.

In the foregoing manner, the target node associated with the service parameter may be quickly and accurately determined based on the pre-obtained association relationship between the service parameter of the sub-IVR flow and the indicator parameter of the node, so that quickness and accuracy of optimizing the IVR flow can be improved.

In a possible implementation, when determining the target node, the apparatus in which the flow optimization module is located may further first obtain, based on the pre-obtained association relationship between the service parameter of the sub-IVR flow and the indicator parameter of the node, an association relationship coefficient that may represent association between an indicator parameter of each node included in the target sub-IVR flow and a service parameter, and then determine the target node based on the association relationship coefficient.

In the foregoing manner, quickness and accuracy of determining the target node may be improved based on the association relationship coefficient that may represent the association between the indicator parameter of the node and the service parameter.

In a possible implementation, when determining the target node based on the association relationship coefficient, the apparatus in which the flow optimization module is located may first obtain, based on each association relationship coefficient and a value of an indicator parameter of each node included in the target sub-IVR flow, a sorting ranking that may represent a degree of excellence of each node; and then determine a specified quantity of to-be-optimized target nodes from the nodes based on sorting rankings of the nodes.

In the foregoing manner, the target node may be selected through comprehensive evaluation from a plurality of dimensions like the association relationship coefficient and the indicator parameter of the node, so that accuracy of determining the target node may be improved to the greatest extent. When the target node selected in the manner is adjusted, the value of the service parameter of the optimized target sub-IVR flow may be improved to the greatest extent, to achieve an objective of quickly and accurately optimizing the IVR flow.

In a possible implementation, when determining (obtaining) the sorting ranking representing the degree of excellence of each node, the apparatus in which the flow optimization module is located may first obtain, for each indicator parameter, a sub-sorting ranking of each node in the indicator parameter based on a value of each node included in the target sub-IVR flow in the indicator parameter; and then obtain, based on a weighted value between the association relationship coefficient and the sub-sorting ranking of each node, and the like, the sorting ranking that can represent the degree of excellence of each node.

In the foregoing manner, the sub-sorting ranking that can represent the degree of excellence of each node may be accurately obtained based on the association relationship coefficient and the sub-sorting ranking of each node in the indicator parameter, so that accuracy of determining the to-be-optimized target node can be improved. When the target node selected in the manner is adjusted, the value of the service parameter of the optimized target sub-IVR flow may be improved to the greatest extent, to quickly and accurately optimize the IVR flow.

In a possible implementation, the association relationship, between the service parameter of the sub-IVR flow and the indicator parameter of the node, that is obtained by the apparatus in which the flow optimization module is located may be obtained based on a trained association relationship model. The service parameter of the sub-IVR flow may be input into the trained association relationship model, and the association relationship model may determine, based on the input service parameter of the sub-IVR flow, an indicator parameter that is of a node and that is associated with the input service parameter of the sub-IVR flow.

In a possible implementation, a training process of the association relationship model includes:

An apparatus in which a first model training module is located obtains a sample service parameter of any sub-IVR flow in a sample set. The sample service parameter corresponds to an association relationship coefficient sample label between the sample service parameter of the sub-IVR flow and an indicator parameter of each node in the sub-IVR flow. The apparatus in which the first model training module is located inputs the obtained sample service parameter of the sub-IVR flow into a to-be-trained association relationship model. The association relationship model performs an operation on the input sample service parameter of the sub-IVR flow, determines an indicator parameter that is of a node and that is associated with the sample service parameter of the sub-IVR flow, and outputs an association relationship coefficient identification label between the sample service parameter of the sub-IVR flow and the indicator parameter of each node in the sub-IVR flow. The apparatus in which the first model training module is located trains a to-be-trained association relationship model based on an association relationship coefficient identification label and an association relationship coefficient sample label.

In the foregoing manner, the association relationship between the service parameter of the sub-IVR flow and the indicator parameter of the node may be quickly and accurately obtained based on the trained association relationship model, and accuracy of determining the target node may be improved based on the association relationship, to improve quickness and accuracy of optimizing the IVR flow.

In a possible implementation, when selecting a target optimization solution from the optimization solution set, the apparatus in which the flow optimization module is located may determine, based on a pre-obtained correspondence between an indicator parameter of a node of a sub-IVR flow and an optimization solution, an optimization solution that is in the optimization solution set and that corresponds to a value of an indicator parameter of the target node of the target sub-IVR flow as the target optimization solution.

In the foregoing manner, the determined target optimization solution is an optimization solution, corresponding to the value of the indicator parameter of the target node of the target sub-IVR flow, in the optimization solution set. Therefore, the target optimization solution may be better applicable to the target node. When the target node in the target sub-IVR flow is optimized based on the target optimization solution, an objective of optimizing the target sub-IVR flow may be achieved to the greatest extent.

In a possible implementation, the apparatus in which the flow optimization module is located may determine one or more optimization solutions that are obtained based on the optimization solution library model and that correspond to the value of the indicator parameter of the target node of the target sub-IVR flow as candidate solutions, and may display each candidate solution. The operation management personnel may select a solution from the candidate solutions as the target optimization solution, or may modify a specific candidate solution. The apparatus in which the flow optimization module is located may identify the candidate solution selected by the operation management personnel (the user) or a candidate solution modified by the user, and may determine the candidate solution selected by the user or the candidate solution modified by the user as the target optimization solution.

In the foregoing manner, the candidate solution selected by the user or the candidate solution modified by the user may be determined as the target optimization solution, to improve flexibility and accuracy of determining the target optimization solution.

In a possible implementation, the apparatus in which the flow optimization module is located may obtain, based on the optimization solution library model, one or more optimization solutions corresponding to the value of the indicator parameter of the target node of the target sub-IVR flow, and respectively use these optimization solutions as candidate solutions. The candidate solutions carry priority information, and a target optimization solution may be selected from the candidate solutions based on the priority information.

In the foregoing manner, flexibility and accuracy of determining the target optimization solution can be improved based on the priority information of the candidate solutions.

In a possible implementation, the correspondence between an indicator parameter of a node of a sub-IVR flow and an optimization solution that is pre-obtained by the apparatus in which the flow optimization module is located may be obtained based on a trained optimization solution library model. A value of the indicator parameter of the node of the sub-IVR flow may be input into the optimization solution library model, and the optimization solution library model may determine an optimization solution corresponding to the value of the input indicator parameter of the node of the sub-IVR flow.

In a possible implementation, a training process of the optimization solution library model includes:

An apparatus in which a second model training module is located obtains values of a sample indicator parameter of several nodes of any sub-IVR flow in the sample set. The sample indicator parameter corresponds to an optimization solution sample label that is applicable to the values of the sample indicator parameter of the several nodes of the sub-IVR flow. The apparatus in which the second model training module is located may input the obtained values of the sample indicator parameter of the several nodes of the sub-IVR flow into a to-be-trained optimization solution library model. The optimization solution library model performs an operation on the values of the input sample indicator parameter of the several nodes of the sub-IVR flow, to determine an optimization solution applicable to the values of the sample indicator parameter of the several nodes of the sub-IVR flow, and outputs an optimization solution identification label. The apparatus in which the second model training module is located trains the to-be-trained optimization solution library model based on the optimization solution identification label and the optimization solution sample label.

In the foregoing manner, the correspondence between an indicator parameter of a node of a sub-IVR flow and an optimization solution may be quickly and accurately obtained based on the trained optimization solution library model. Based on the correspondence, accuracy of determining the target optimization solution can be improved, to improve quickness and accuracy of optimizing the IVR flow.

In a possible implementation, when determining the target sub-IVR flow from the sub-IVR flows, for each sub-IVR flow, the apparatus in which the flow optimization module is located may collect a difference between a value of each service parameter of the sub-IVR flow and a corresponding reference value, and collect a weighted value between a preset weight of each service parameter of the sub-IVR flow and the corresponding difference, may further collect a reference weighted value between a reference value of each service parameter and the preset weight, and may determine the target sub-IVR flow from the sub-IVR flows based on a difference between the weighted value of each sub-IVR flow and the reference weighted value.

In the foregoing manner, the target sub-IVR flow that needs to be optimized may be comprehensively decided from a plurality of perspectives based on the preset weight of the service parameter and the difference between the value of each service parameter and the reference value, so that the to-be-optimized target sub-IVR flow can be flexibly and accurately determined.

In a possible implementation, the apparatus in which the flow optimization module is located may further perform a comparative test on an optimized target sub-IVR flow and the target sub-IVR flow before optimization. If a test result shows that a value of a service parameter of the optimized target sub-IVR flow is worse than a value of a service parameter of the target sub-IVR flow before optimization, the target sub-IVR flow before optimization may still be used. If a test result shows that a value of a service parameter of the optimized target sub-IVR flow is better than a value of a service parameter of the target sub-IVR flow before optimization, the optimized target sub-IVR flow may be used.

In the foregoing manner, it can be ensured to the greatest extent that a currently used target sub-IVR flow is a sub-IVR flow with a better service parameter value, to ensure an execution effect of the sub-IVR flow to the greatest extent.

In a possible implementation, the apparatus in which the flow optimization module is located may further obtain a reference association relationship coefficient between an indicator parameter of each node in the target sub-IVR flow and each service parameter of the target sub-IVR flow based on a value of a service parameter and a value of an indicator parameter of a node that correspond to each of the optimized target sub-IVR flow and the target sub-IVR flow before optimization and that are included in the test result, and perform optimization training on the association relationship model based on the reference association relationship coefficient, to optimize and update the association relationship that is between the service parameter of the sub-IVR flow and the indicator parameter of the node and that is previously obtained based on the association relationship model.

In the foregoing manner, optimization experience of the IVR flow can be continuously accumulated, the association relationship model can be continuously optimized, and the association relationship between the service parameter of the sub-IVR flow and the indicator parameter of the node can be continuously optimized, to continuously improve an optimization effect of the IVR flow.

In a possible implementation, the apparatus in which the flow optimization module is located may further optimize and update the obtained correspondence between the indicator parameter of the node of the sub-IVR flow and the optimization solution based on the test result.

In the foregoing manner, the optimization experience of the IVR flow can be continuously accumulated, the optimization solution library model can be continuously optimized, and the correspondence between an indicator parameter of a node of a sub-IVR flow and an optimization solution can be continuously optimized, to continuously improve an optimization effect of the IVR flow.

According to a second aspect, an embodiment of this application further provides a flow optimization apparatus. The flow optimization apparatus has a function of implementing behavior of the apparatus in which the flow optimization module is located in the method instance in the first aspect. For beneficial effects, refer to the descriptions of the first aspect. Details are not described herein again. The function may be implemented by hardware, or may be implemented by executing corresponding software by hardware. The hardware or software includes one or more modules corresponding to the foregoing functions. A structure of the flow optimization apparatus may include a flow optimization module.

The flow optimization module is configured to: obtain a value of at least one service parameter of each sub-IVR flow in an IVR flow in a target period, and determine a target sub-IVR flow from the sub-IVR flows based on a value of each service parameter and a reference value corresponding to each service parameter; determine, from a plurality of nodes included in the target sub-IVR flow, a target node that is in the target sub-IVR flow and that is associated with the service parameter; select a target optimization solution from an optimization solution set, where the target optimization solution is used for optimizing the target node; and optimize the target sub-IVR flow based on the target optimization solution.

In a possible implementation, the flow optimization module may determine the target node based on a pre-obtained association relationship between a service parameter of a sub-IVR flow and an indicator parameter of a node.

In a possible implementation, the flow optimization module may obtain association relationship coefficients based on the pre-obtained association relationship between the service parameter of the sub-IVR flow and the indicator parameter of the node, where the association relationship coefficients all represent association between any indicator parameter of each node included in the target sub-IVR flow and the service parameter; and may determine the target node based on each association relationship coefficient.

In a possible implementation, the flow optimization module may obtain, based on each association relationship coefficient and a value of an indicator parameter of each node included in a target sub-IVR flow, a sorting ranking representing a degree of excellence of each node; and determine a specified quantity of to-be-optimized target nodes from the nodes based on sorting rankings of the nodes.

In a possible implementation, the flow optimization module may obtain, for each indicator parameter based on a value of each node in the indicator parameter, a sub-sorting ranking of each node in the indicator parameter; and may obtain, based on each association relationship coefficient and the sub-sorting ranking of each node, the sorting ranking representing the degree of excellence of each node.

In a possible implementation, the association relationship between the service parameter of the sub-IVR flow and the indicator parameter of the node is obtained based on a trained association relationship model, and the association relationship model may determine, based on an input service parameter of a sub-IVR flow, an indicator parameter that is of a node and that is associated with the input service parameter of the sub-IVR flow.

In a possible implementation, the flow optimization module may determine, based on a pre-obtained correspondence between an indicator parameter of a node of a sub-IVR flow and an optimization solution, an optimization solution that is in the optimization solution set and that corresponds to a value of an indicator parameter of the target node of the target sub-IVR flow as the target optimization solution.

In a possible implementation, the flow optimization module may determine at least one optimization solution that is in the optimization solution set and that corresponds to the value of the indicator parameter of the target node of the target sub-IVR flow as a candidate solution, and displaying each candidate solution; and determine the target optimization solution based on a candidate solution selected by a user or a candidate solution modified by a user.

In a possible implementation, the correspondence between the indicator parameter of the node of the sub-IVR flow and the optimization solution is obtained based on a trained optimization solution library model, and the optimization solution library model may determine, based on a value of an input indicator parameter of a node of a sub-IVR flow, an optimization solution corresponding to the value of the input indicator parameter of the node of the sub-IVR flow.

In a possible implementation, for each sub-IVR flow, the flow optimization module may collect a difference between a value of each service parameter of the sub-IVR flow and a reference value of the corresponding service parameter, and collect a weighted value between a preset weight of each service parameter of the sub-IVR flow and the corresponding difference; and determine the target sub-IVR flow from the sub-IVR flows based on the weighted value of each sub-IVR flow and a reference weighted value between the reference value and the preset weight of each service parameter.

In a possible implementation, the flow optimization module may further perform a comparative test on an optimized target sub-IVR flow and the target sub-IVR flow before optimization, and if a value of a service parameter of the optimized target sub-IVR flow is worse than a value of a service parameter of the target sub-IVR flow before optimization in a test result, restore a currently used target sub-IVR flow to the target sub-IVR flow before optimization; or if a value of a service parameter of the optimized target sub-IVR flow is better than a value of a service parameter of the target sub-IVR flow before optimization in a test result, use the optimized target sub-IVR flow.

In a possible implementation, the flow optimization module may further obtain a reference association relationship coefficient between an indicator parameter of each node in the target sub-IVR flow and each service parameter of the target sub-IVR flow based on a value of a service parameter and a value of an indicator parameter of a node that correspond to each of the optimized target sub-IVR flow and the target sub-IVR flow before optimization and that are included in the test result; and optimize and update the obtained association relationship between the service parameter of the sub-IVR flow and the indicator parameter of the node based on the reference association relationship coefficient.

In a possible implementation, the flow optimization module may further optimize and update the obtained correspondence between the indicator parameter of the node of the sub-IVR flow and the optimization solution based on the test result.

According to a third aspect, this application further provides a computing device. The computing device includes a processor and a memory, and may further include a communication interface. The processor executes program instructions in the memory to perform the method provided in any one of the first aspect or the possible implementations of the first aspect. The memory is coupled to the processor, and stores program instructions and data that are necessary in a process of determining flow optimization. The communication interface is configured to communicate with another device, for example, obtain a value of a service parameter of each sub-IVR flow, obtain association relationship between a service parameter of a sub-IVR flow and an indicator parameter of a node, and obtain a correspondence between an indicator parameter of a node of a sub-IVR flow and an optimization solution.

According to a fourth aspect, this application provides a computing device system. The computing device system includes at least one computing device. Each computing device includes a memory and a processor. The processor of the at least one computing device is configured to access code in the memory to perform the method in any one of the first aspect or the possible implementations of the first aspect.

According to a fifth aspect, this application provides a computer-readable storage medium. When the computer-readable storage medium is executed by a computing device, the computing device performs the method in any one of the first aspect or the possible implementations of the first aspect. The storage medium stores a program. The storage medium includes but is not limited to a volatile memory, for example, a random access memory, and a nonvolatile memory, for example, a flash memory, a hard disk drive (hard disk drive, HDD), or a solid-state drive (solid-state drive, SSD).

According to a sixth aspect, this application provides a computing device program product. The computing device program product includes computer instructions. When the computer instructions are executed by a computing device, the computing device performs the method in any one of the first aspect or the possible implementations of the first aspect. The computer program product may be a software installation package. When the method in any one of the first aspect or the possible implementations of the first aspect needs to be used, the computer program product may be downloaded and executed on a computing device.

According to a seventh aspect, this application further provides a computer chip. The chip is connected to a memory. The chip is configured to read and execute a software program stored in the memory, to perform the method in any one of the first aspect and the possible implementations of the first aspect.

### BRIEF DESCRIPTION OF DRAWINGS

FIG. 1 is a diagram of an architecture of a flow optimization system according to an embodiment of this application;
FIG. 2 is a diagram of an architecture of another flow optimization system according to an embodiment of this application;
FIG. 3 is a diagram of a process of a flow optimization method according to an embodiment of this application;
FIG. 4 is a diagram of a process of another flow optimization method according to an embodiment of this application;
FIG. 5 is a diagram of a structure of a flow optimization apparatus according to an embodiment of this application; and
FIG. 6 and FIG. 7 are diagrams of structures of computing devices according to embodiments of this application.

### DESCRIPTION OF EMBODIMENTS

Before a flow optimization method and apparatus, and a device provided in embodiments of this application are described, some concepts in embodiments of this application are first described.

### (1) Interactive voice response (Interactive Voice Response, IVR)

The IVR may provide an automatic voice service and is a main tool for an enterprise call center to provide a self service for a customer. As a portal of the call center, the IVR initially has two functions: 1. initially identifying a customer requirement, and guiding the customer requirement through different button settings; and 2. reducing increasing labor costs by providing an automatic voice service. The IVR may use a customer-oriented voice directory to complete corresponding information query and command execution based on customer selection (where the customer may perform selection using a phone keyboard or through voice). The customer may perform self-service handling and the like through direct language input.

An IVR flow may include a plurality of sub-IVR flows. Different sub-IVR flows may be for handling different services. For example, after the customer accesses the IVR flow by dialing a number or the like, the customer may select, based on a voice prompt or the like, a sub-IVR flow for handling a mobile phone service, a sub-IVR flow for handling a notebook computer service, or the like.

### (2) Service parameter of an IVR flow (sub-IVR flow)

The service parameter of the IVR flow is also referred to as a KPI indicator of the IVR flow. The service parameter may be used for reflecting properness of the IVR flow and whether the IVR flow can satisfy a customer requirement. The service parameter of the IVR flow may include an IVR flow distribution rate, an IVR first contact resolution, an IVR flow repeated dialing rate, and the like.

The IVR flow distribution rate generally is a proportion (rate) of a quantity of calls completed through a self service in the IVR flow in a total quantity of calls in a period of time. The total quantity of calls is a sum of the quantity of calls completed through the self service in the IVR flow (for ease of description, referred to as a first call quantity) and a quantity of calls that are with related problems not resolved through the self service in the IVR flow and are transferred to a manual customer service for handling (for ease of description, referred to as a second call quantity). In other words, the total quantity of calls may be a sum of the first call quantity and the second call quantity.

The IVR flow distribution rate is a key indicator for evaluating IVR validity. Generally, a higher IVR flow distribution rate indicates that a corresponding IVR flow can provide a self service for the customer better.

The IVR first contact resolution generally is a proportion (rate) of a quantity of calls with contact requirements of customers that are satisfactorily satisfied through a first-time self-service contact in the IVR flow without subsequent work, callback, re-confirmation, or the like, that is, a quantity of calls that can resolve customer problems one time in the first call quantity in a period of time. The first call quantity is the quantity of calls completed through the self service in the IVR flow in the period of time.

It may be learned that the IVR first contact resolution may indicate a rate of customer problems that are resolved one time. The IVR first contact resolution is a key indicator for measuring efficiency of an IVR system and customer satisfaction. Generally, a higher IVR first contact resolution indicates that a corresponding IVR flow can provide a self service for the customer better and satisfy the customer requirement better.

The IVR flow repeated dialing rate is also referred to as an IVR repeated call rate. A call center has a data background that can collect IVR logs and IVR contact history. The data is displayed in a form of a detailed report. A unique customer identifier may be filtered and identified from the detail report, to collect a quantity of customers and a total quantity of calls from these customers in a specified time interval. A formula for calculating the repeated call rate is as follows:

IVR repeated call rate=(Total quantity of calls with recorded customer numbers-Total quantity of customers with recorded customer numbers)/Total quantity of calls with recorded customer numbers

Generally, a lower IVR repeated call rate indicates that a corresponding IVR flow can provide a self service for the customer better and satisfy the customer requirement better.

A single service parameter sometimes may not objectively reflect (measure) properness (a degree of excellence) of an IVR flow. For example, an IVR flow distribution rate of a specific IVR flow is very high. However, this may be caused only because the IVR flow lacks an option for transferring to a manual customer service for handling or the option is hidden deeply, to make it difficult for the user to find the option, causing an illusion that the IVR flow distribution rate is falsely high. In this case, a plurality of service parameters such as the IVR flow distribution rate and the IVR first contact resolution may be combined to measure the degree of excellence of the IVR flow.

### (3) Indicator parameter of a node

The node may be understood as a step needed for handling a service in an IVR flow (sub-IVR flow). For example, the node may include inputting a certificate number and inputting a password. The indicator parameter of the node may indicate whether settings of each node in the IVR flow are proper. The indicator parameter of the node may include: a node surfing volume, a node surfing rate, a node repeated playback volume (also referred to as a node repeated access volume), a node direct rate, a node access rate, a node failure volume, a node button ranking, and the like. Specific content of the node and the indicator parameter is not limited in this application. The node and the indicator parameter listed herein are merely examples for description. The node and the indicator parameter are related to a specific IVR flow.

The node surfing volume generally is an access volume that is returned from a successor node (a lower-layer node) of a current node to the current node, and is generally caused because a customer finds, after the customer accesses the successor node, that a related problem cannot be resolved and needs to return to a preceding node (an upper-layer node) to search for a needed service again. The node surfing volume may reflect properness of settings of the current node and feasibility of the IVR flow. A higher node surfing volume indicates more improper settings of the node in the IVR flow.

The node surfing rate is generally a proportion of a node surfing volume of a current node in all access volumes (a total node access volume) of the current node. Similar to the node surfing volume, a higher node surfing rate indicates more improper settings of the node in the IVR flow. The total node access volume is explained later, and details are not described herein.

The node repeated playback volume is generally a quantity of times that a same node is repeatedly accessed (by selecting a replay button). The node repeated playback volume may reflect clarity and accuracy of prompt voice content of the node. A higher node repeated playback volume generally indicates that the prompt voice content of the node is not clear or accurate or the content cannot be easily understood by a customer.

The node direct rate generally is a proportion of an access volume (a node direct volume) that reaches a current node by performing access (forward access) in a direction specified by an access hierarchy relationship between nodes in all access volumes (a total node access volume) of the current node. The node direct rate may reflect access frequency of the node and validity of the node. Generally, a higher node direct rate indicates more proper settings of the node in the IVR flow. A formula of the node direct rate may be expressed as follows: Node direct rate=Node direct volume/Total node access volume, where Total node access volume=Node direct volume+Node surfing volume+Node repeated playback volume.

The node failure volume is generally an access volume that is in a state in which a customer-related problem is not resolved (unsuccessfully handled) during exiting of the IVR flow from the current node. Generally, a higher node failure volume indicates more improper settings of the node in the IVR flow.

The node button ranking generally indicates an access ranking of a node button in the IVR flow. Generally, a node with an earlier node button ranking indicates that it is more likely for the customer to access the node.

The following briefly describes a design idea of embodiments of this application.

In the related technology, a report statistical tool may collect statistics on and analyze an access log of an IVR flow accessed by a customer, and display a service indicator related to the IVR flow. The service indicator may include a value of a service parameter of each sub-IVR flow included in the IVR flow, a value of an indicator parameter of a node included in each sub-IVR flow, and the like. When optimizing the IVR flow, operation management personnel generally need to manually analyze the service indicator collected using the report statistical tool and manually summarize an optimization solution of the IVR flow. After the operation management personnel manually summarize the optimization solution of the IVR flow, IVR flow customization development personnel, service management personnel who master an IVR flow orchestration technology, or the like may manually orchestrate and optimize the IVR flow online or offline based on a service processing logic requirement in the optimization solution via an IVR orchestration tool. An optimized IVR flow may be loaded and run based on an IVR flow running environment providing tool, so that the optimized IVR flow may be used by the customer, for example, to process a call request of the customer and record an access log of the customer to the IVR flow.

In the related technology, a process of determining an optimization solution and optimizing an IVR flow based on the optimization solution both need to be performed manually, and consequently, efficiency is low, and labor costs are also high.

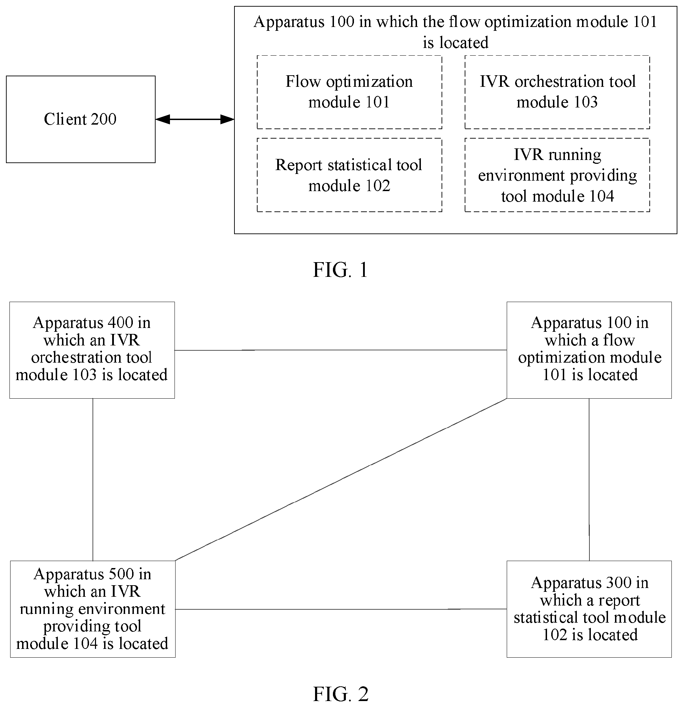

In view of this, this application provides a flow optimization method and apparatus, and a device, to quickly and conveniently optimize an IVR flow. FIG. 1 is a diagram of an architecture of a flow optimization system according to an embodiment of this application. The flow optimization system includes a client 200 and an apparatus 100 in which a flow optimization module 101 is located.

The client 200 has a data input function and a data obtaining function. The client 200 may be deployed on a user side. The operation management personnel (user) of an IVR flow may input an IVR flow optimization objective through the client 200. The IVR flow optimization objective input by the operation management personnel may include values (for ease of description, referred to as reference values) of several service parameters, such as an IVR flow distribution rate and an IVR first contact resolution that are respectively expected to be achieved, a weight (for ease of description, referred to as a preset weight) corresponding to each service parameter, and the like. The client 200 may obtain the IVR flow optimization objective input by the operation management personnel.

A connection exists between the client 200 and the apparatus 100 in which the flow optimization module 101 is located. The client 200 may transmit data of the obtained IVR flow optimization objective to the apparatus 100 in which the flow optimization module 101 is located, so that the apparatus 100 in which the flow optimization module 101 is located determines, based on the IVR flow optimization objective, a to-be-optimized target sub-IVR flow and the like from the sub-IVR flows.

The client 200 may further have a transmission function. Because the client 200 is closer to the operation management personnel (user), the client 200 may further transmit an optimization record of the IVR flow and the like to the user, or may display a candidate solution when assistance of the user is needed to determine a target optimization solution. The user may manually select or modify the candidate solution through the client 200. The apparatus 100 in which the flow optimization module 101 is located may determine the candidate solution selected or modified by the user through the client 200 as the target optimization solution.

The apparatus 100 in which the flow optimization module 101 is located can optimize the IVR flow. Still refer to FIG. 1. The apparatus 100 in which the flow optimization module 101 is located may include: the flow optimization module 101, a report statistical tool module 102, an IVR orchestration tool module 103, and an IVR running environment providing tool module 104.

The report statistical tool module 102 may collect and analyze an access log of an IVR flow accessed by a customer, and display a service indicator related to the IVR flow. The service indicator may include a value of a service parameter of each sub-IVR flow included in the IVR flow, a value of an indicator parameter of a node included in each sub-IVR flow, and the like.

The flow optimization module 101 may determine a to-be-optimized target sub-IVR flow from the sub-IVR flows based on the value of the service parameter of the sub-IVR flow and a reference value of a service parameter configured by the operation management personnel, determine, from nodes included in the target sub-IVR flow, a target node associated with the service parameter, and select, from an optimization solution set, a target optimization solution that can optimize the target node.

The IVR orchestration tool module 103 may provide an IVR orchestration tool for orchestrating and optimizing the IVR flow. In this embodiment of this application, after determining the target optimization solution, the flow optimization module 101 may generate an optimization operation instruction for the target node based on adjustment information of the node in the target sub-IVR flow included in the target optimization solution, and drive the IVR orchestration tool module 103. The IVR orchestration tool module 103 adjusts (optimizes), based on the IVR orchestration tool and the optimization operation instruction, a node button ranking, voice playing content, and the like included in the target sub-IVR flow, to orchestrate and optimize the target sub-IVR flow automatically and intelligently.

The flow optimization module 101 may also be referred to as a module in which an IVR analysis optimization tool is located. The flow optimization module 101 and the IVR orchestration tool module 103 may be two modules that are independent of each other, or may be integrated into one module. This is not specifically limited in this application.

The IVR running environment providing tool module 104 may be configured to load and run an optimized IVR flow, so that the optimized IVR flow may be used by the customer, for example, may be used to process a call request of the customer, and record an access log of the customer to the IVR flow.

A specific form of the apparatus 100 in which the flow optimization module is located is not limited in this embodiment of this application. The apparatus 100 in which the flow optimization module is located may be a hardware apparatus. For example, the apparatus 100 in which the flow optimization module is located may be a computing device, a computing device cluster, a chip or a processor in the computing device, or the like. The apparatus 100 in which the flow optimization module is located may alternatively be a software apparatus. The apparatus 100 in which the flow optimization module is located may be flow optimization software, a container, a virtual machine, or the like that is deployed on one or more computing devices.

In FIG. 1, only an example in which the apparatus 100 in which the flow optimization module is located interacts with the user through the client 200 is used for description. During actual application, the apparatus 100 in which the flow optimization module is located may alternatively be directly deployed on the user side, and directly interact with the user, to obtain the IVR flow optimization objective provided by the user, the candidate solution selected or modified by the user, and the like.

In addition, the modules included in the apparatus 100 in which the flow optimization module is located may be respectively deployed in a plurality of independent apparatuses in a distributed manner. FIG. 2 is a diagram of an architecture of another flow optimization system according to an embodiment of this application. The flow optimization system includes an apparatus 100 in which a flow optimization module 101 is located, an apparatus 300 in which a report statistical tool module 102 is located, an apparatus 400 in which an IVR orchestration tool module 103 is located, and an apparatus 500 in which an IVR running environment providing tool module 104 is located. No matter whether the four modules, namely, the flow optimization module 101, the report statistical tool module 102, the IVR orchestration tool module 103, and the IVR running environment providing tool module 104, are integrated into a same apparatus (for example, integrated into the apparatus 100 in which the flow optimization module 101 is located), or are deployed in a plurality of apparatuses in a distributed manner, functions of the four modules may remain unchanged. For example, the apparatus 300 in which the report statistical tool module 102 is located may collect and analyze, based on the report statistical tool module 102, an access log of an IVR flow accessed by a customer, and display a service indicator related to the IVR flow. The service indicator may include a value of a service parameter of each sub-IVR flow included in the IVR flow, a value of an indicator parameter of a node included in each sub-IVR flow, and the like.

The apparatus 100 in which the flow optimization module 101 is located may determine, via the flow optimization module 101, a to-be-optimized target sub-IVR flow from the sub-IVR flows based on the value of the service parameter of the sub-IVR flow and a reference value of a service parameter configured by the operation management personnel, determine, from a node included in the target sub-IVR flow, a target node associated with the service parameter, and select, from an optimization solution set, a target optimization solution that can optimize the target node.

The apparatus 400 in which the IVR orchestration tool module 103 is located may provide an IVR orchestration tool for orchestrating and optimizing the IVR flow. After determining the target optimization solution, the flow optimization module 101 may generate an optimization operation instruction for the target node based on adjustment information of the node in the target sub-IVR flow included in the target optimization solution, and the apparatus 100 in which the flow optimization module 101 is located drives the apparatus 400 in which the IVR orchestration tool module 103 is located. In this case, an IVR orchestration tool in the IVR orchestration tool module 103 may adjust (optimize), based on the optimization operation instruction, a node button ranking, voice playing content, and the like included in the target sub-IVR flow, to orchestrate and optimize the target sub-IVR flow automatically and intelligently. The apparatus 500 in which the IVR running environment providing tool module 104 is located may load and run an optimized IVR flow based on the IVR running environment providing tool module 104, so that the optimized IVR flow can be used by the customer. Details are not described herein again.

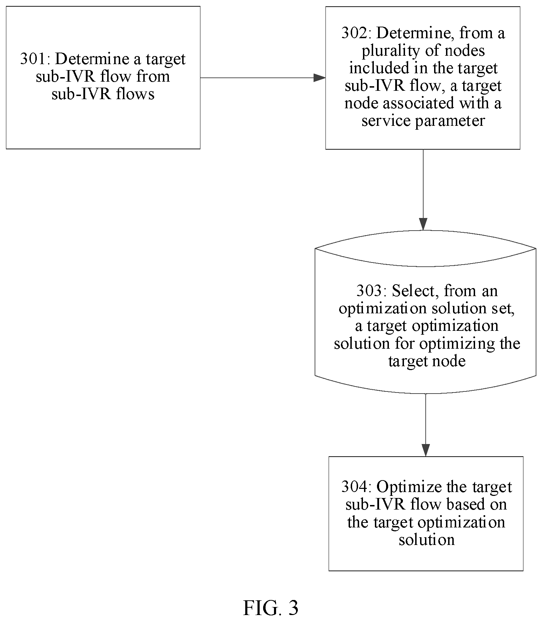

The following describes a flow optimization method provided in an embodiment of this application with reference to FIG. 3. For ease of understanding, in this embodiment of this application, a flow optimization solution provided in this embodiment of this application is explained and described by using an example in which four modules, namely, a flow optimization module 101, a report statistical tool module 102, an IVR orchestration tool module 103, and an IVR running environment providing tool module 104 are all integrated into an apparatus 100 in which the flow optimization module is located. The flow optimization method provided in this embodiment of this application is applied to the apparatus 100 in which the flow optimization module is located. When performing the flow optimization method provided in this embodiment of this application, the apparatus 100 in which the flow optimization module is located may perform the following steps.

Step 301: The apparatus 100 in which the flow optimization module is located obtains a value of at least one service parameter of each sub-interactive voice response (Interactive Voice Response, IVR) flow in an IVR flow in a target period, and determines a target sub-IVR flow from the sub-IVR flows based on a value of each service parameter and a reference value corresponding to each service parameter.

The report statistical tool module 102 in the apparatus 100 in which the flow optimization module is located may collect statistics on and analyze an access status of a user to the IVR flow in the target period, and may collect, based on the access status of the user to the IVR flow, values of several (at least one) service parameters such as an IVR flow distribution rate, an IVR first contact resolution, and an IVR flow repeated dialing rate of each sub-IVR flow included in the IVR flow in the target period. The sub-IVR flow included in the IVR flow is not specifically limited in this application, and different sub-IVR flows may be used to handle different services. A specific process in which the report statistical tool module 102 determines the value of the service parameter of each sub-IVR flow is not specifically limited in this application, and a specific time length of the target period is also not specifically limited, both of which may be flexibly set based on a requirement.

To cause the apparatus 100 in which the flow optimization module is located to identify a target sub-IVR flow that needs to be optimized, operation management personnel of the IVR flow and the like may preconfigure an IVR flow optimization objective. The IVR flow optimization objective may include values that several service parameters are respectively expected to achieve (for ease of description, referred to as reference values). In addition, the IVR flow optimization objective may further include a weight corresponding to each service parameter (for ease of description, referred to as a preset weight). A quantity of service parameters, the reference values of the service parameters, preset weights, and the like included in the IVR flow optimization objective are not specifically limited in this application. A sum of the preset weights of the service parameters included in the IVR flow optimization objective may be a value like 1.

The apparatus 100 in which the flow optimization module is located may obtain a reference value and a preset weight that are corresponding to each service parameter and that are configured by the operation management personnel. The operation management personnel in embodiments of this application may be a person who has no experience in flow optimization, and only needs to configure a related IVR flow optimization objective based on a service requirement. Subsequently, the apparatus 100 in which the flow optimization module is located may optimize the IVR flow automatically and intelligently according to the flow optimization method provided in this application, so that a threshold for using the flow optimization method may be reduced, flow optimization costs are reduced, and optimization efficiency is improved.

The apparatus 100 in which the flow optimization module is located may select (determine), from the sub-IVR flows based on the value of the service parameter of each sub-IVR flow and the reference value corresponding to the service parameter, the target sub-IVR flow that needs to be optimized. When the target sub-IVR flow is determined, for each sub-IVR flow, a difference between a value of a service parameter of the sub-IVR flow and a reference value of the corresponding service parameter may be collected (calculated), and then the target sub-IVR flow is selected from the sub-IVR flows based on the difference. For example, sub-IVR flows with values of service parameters that do not reach the reference value of the corresponding service parameter may be separately determined as the target sub-IVR flow in sequence. For example, for to-be-optimized sub-IVR flows with values of service parameters that do not reach the corresponding reference value, the to-be-optimized sub-IVR flows may be sorted in descending order of differences between the values of the service parameters of the to-be-optimized sub-IVR flows and the corresponding reference value. The to-be-optimized sub-IVR flows are separately determined as the target sub-IVR flow in sequence from the earliest one to the latest one, and the to-be-optimized sub-IVR flows are separately optimized.

In addition, when the target sub-IVR flow is selected from the sub-IVR flows, the target sub-IVR flow may alternatively be selected based on the difference between the value of the service parameter and the reference value of the service parameter and a preset weight of the service parameter. For example, for each sub-IVR flow, a difference between a value of a service parameter of the sub-IVR flow and the corresponding reference value may be first collected (calculated), and a weighted value between a preset weight of the service parameter of the sub-IVR flow and the difference corresponding to the service parameter (for ease of description, referred to as a multidimensional weighted value) is collected; and then each sub-IVR flow of which a multidimensional weighted value does not reach a weighted value between the reference value and the preset weight of the service parameter (for ease of description, referred to as a reference weighted value) is used as a to-be-optimized target sub-IVR flow. For example, for to-be-optimized sub-IVR flows of which multidimensional weighted values do not reach the reference weighted value, the to-be-optimized sub-IVR flows may be sorted in descending order of differences between the multidimensional weighted values and the reference weighted value. The to-be-optimized sub-IVR flows are separately determined as the target sub-IVR flow in sequence from the earliest one to the latest one, and the to-be-optimized sub-IVR flows are separately optimized. In addition, after the to-be-optimized sub-IVR flows are sorted in descending order of the differences between the multidimensional weighted values and the reference weighted value, earliest sub-IVR flows of a specified quantity in the sorting sequence may be separately determined as the target sub-IVR flow in sequence. In addition, sub-IVR flows with differences (deviations) between multidimensional weighted values and the reference weighted value that are greater than a specified deviation threshold may be separately determined as the target sub-IVR flow. This is not specifically limited in this application.

For ease of understanding, the following explains and describes a process of determining a multidimensional weighted value and a reference weighted value by using an example in which the service parameter includes a service parameter a and a service parameter b, a preset weight of the service parameter a is 50%, and a preset weight of the service parameter b is 50%. The reference weighted value may be: Reference value of the service parameter a×50%+Reference value of the service parameter b×50%. A process of determining the multidimensional weighted value is similar to a process of determining the reference weighted value. The multidimensional weighted value may be: (Value of the service parameter a-Reference value of the service parameter a)×50%+(Value of the service parameter b-Reference value of the service parameter b)×50%.

In this application, the target sub-IVR flow that needs to be optimized may be comprehensively decided from a plurality of perspectives based on the preset weight of the service parameter and the difference between the value of the service parameter and the reference value, so that the to-be-optimized target sub-IVR flow can be flexibly and accurately determined.

Step 302: The apparatus 100 in which the flow optimization module is located determines, from a plurality of nodes included in the target sub-IVR flow, a target node that is in the target sub-IVR flow and that is associated with the service parameter.

Considering that a sub-IVR flow includes a plurality of nodes needed for handling a corresponding service, for example, nodes for inputting a certificate number and inputting a password, when the target sub-IVR flow is optimized, a sequence (button sequence) of the nodes included in the sub-IVR flow may be adjusted, content played by the nodes may be adjusted, a node may be deleted, or the like, to optimize the sub-IVR flow. To quickly and accurately optimize the target sub-IVR flow, a node that is associated with the service parameter and that is in the target sub-IVR flow may be determined first, and the node is used as the to-be-optimized target node. The target sub-IVR flow is optimized by optimizing the target node.

When determining the target node, the apparatus 100 in which the flow optimization module is located may quickly and accurately determine, based on a pre-obtained association relationship between a service parameter of a sub-IVR flow and an indicator parameter of a node, the target node that is associated with the service parameter and that is in the target sub-IVR flow. For example, when a "node repeated access volume" of a specific node in the target sub-IVR flow is too high, it may be considered that voice playing content (node prompt voice content) and the like of the node may be set improperly. As a result, the customer needs to access a same node a plurality of times and listen to the same node a plurality of times. This may affect a service parameter, namely, a first contact resolution of the target sub-IVR flow. Therefore, in the obtained association relationship between the service parameter of the sub-IVR flow and the indicator parameter of the node, information about an association relationship between the service parameter, namely, the first contact resolution of the target sub-IVR flow, and an indicator parameter, namely, the node repeated access volume of the node may be included, so that the flow optimization model may determine the node as the target node based on the association relationship.

Because the target node is a node associated with the service parameter, optimizing the target node can improve a value of a service parameter of an optimized target sub-IVR flow to the greatest extent, so that optimization on the target sub-IVR flow is implemented. In addition, the target node associated with the service parameter may be quickly and accurately determined based on the pre-obtained association relationship between the service parameter of the sub-IVR flow and the indicator parameter of the node, so that quickness and accuracy of optimizing the IVR flow can be improved.

The association relationship between the service parameter of the sub-IVR flow and the indicator parameter of the node may be obtained based on a trained association relationship model. For example, a service parameter of any sub-IVR flow may be input into the trained association relationship model, and the association relationship model may perform an operation on the input service parameter of the sub-IVR flow, to determine an indicator parameter that is of a node and that is associated with the input service parameter of the sub-IVR flow. A training process of the association relationship model may be performed by an apparatus in which a model training module (for ease of description, referred to as a first model training module) is located. The apparatus in which the first model training module is located and the apparatus 100 in which the flow optimization module is located may be a same apparatus, or may be different apparatuses. This is not specifically limited in this application. The training process of the association relationship model may be as follows:

The apparatus in which the first model training module is located obtains a sample service parameter of any sub-IVR flow in a sample set. The sample service parameter corresponds to an association relationship coefficient sample label between the sample service parameter of the sub-IVR flow and an indicator parameter of each node in the sub-IVR flow. The association relationship coefficient sample label may be manually marked by the operation management personnel, or may be calculated based on values of the service parameter of the sub-IVR flow and values of the indicator parameter of each node in the sub-IVR flow in several statistical periods. A specific process of determining the association relationship coefficient sample label is not specifically limited in this application.

The apparatus in which the first model training module is located may input the obtained sample service parameter of the sub-IVR flow into a to-be-trained association relationship model. The association relationship model performs an operation on the input sample service parameter of the sub-IVR flow, determines an indicator parameter that is of a node and that is associated with the sample service parameter of the sub-IVR flow, and outputs an association relationship coefficient identification label between the sample service parameter of the sub-IVR flow and the indicator parameter of each node in the sub-IVR flow. The apparatus in which the first model training module is located may train the to-be-trained association relationship model based on the association relationship coefficient identification label output by the association relationship model and the association relationship coefficient sample label corresponding to the sample service parameter.

For example, the apparatus in which the first model training module is located may determine, depending on whether the association relationship coefficient identification label is consistent with the association relationship coefficient sample label, whether an identification result of the association relationship model is accurate. In specific implementation, if the association relationship coefficient identification label is inconsistent with the association relationship coefficient sample label, it may be considered that the identification result of the association relationship model is inaccurate, and a parameter of the association relationship model may be adjusted, to train the association relationship model. When the parameter of the association relationship model is adjusted, a gradient descent algorithm may be used to perform backpropagation or the like on a gradient of the parameter of the association relationship model, to adjust the parameter of the association relationship model. The operation may be performed on a sample service parameter of each sub-IVR flow in the sample set. When a preset convergence condition is satisfied, it is determined that training of the association relationship model is completed.

That the preset convergence condition is satisfied may be as follows: A quantity of sample service parameters that are accurately identified, through the association relationship model, and that are in sample service parameters of sub-IVR flows in the sample set is greater than a specified quantity, a quantity of iterations of training the association relationship model reaches a specified maximum quantity of iterations, or the like. In specific implementation, setting may be flexibly performed, and is not specifically limited herein.

In this embodiment of this application, the association relationship between the service parameter of the sub-IVR flow and the indicator parameter of the node may be quickly and accurately obtained based on the trained association relationship model.

When determining the target node based on the pre-obtained association relationship between the service parameter of the sub-IVR flow and the indicator parameter of the node, the apparatus 100 in which the flow optimization module is located may first obtain, based on the association relationship, an association relationship coefficient that may represent association between an indicator parameter of each node included in the target sub-IVR flow and the service parameter, and then determine the target node based on the association relationship coefficient.

The obtained association relationship between the service parameter of the target sub-IVR flow and the indicator parameter of the node may include the association relationship coefficient that may represent the association between the indicator parameter of each node in the target sub-IVR flow and the service parameter. For example, the association relationship coefficient representing the association between the indicator parameter of each node included in the target sub-IVR flow and the service parameter may be a positive correlation association relationship coefficient, a negative correlation association relationship coefficient, or an uncorrelated association relationship coefficient. A value of the uncorrelated association relationship coefficient may be 0. When an association relationship coefficient between an indicator parameter of a specific node and a specific service parameter is 0, it may be considered that the node does not affect a value of the service parameter of the target sub-IVR flow. A value of the positive correlation association relationship coefficient may be any positive number greater than 0 and less than 1. When an association relationship coefficient between an indicator parameter of a specific node and a specific service parameter is a positive correlation association relationship coefficient, it may be considered that when a value of the indicator parameter of the node increases, a value of the service parameter of the target sub-IVR flow also increases accordingly. In addition, when the positive correlation association relationship coefficient increases, an amplitude by which a value of the corresponding service parameter increases is greater accordingly. By contrast, a value of the negative correlation association relationship coefficient may be any negative number not less than -1 and less than 0. When an association relationship coefficient between an indicator parameter of a specific node and a specific service parameter is a negative correlation association relationship coefficient, it may be considered that when an absolute value of a value of the indicator parameter of the node increases, a value of the service parameter of the target sub-IVR flow decreases accordingly. In addition, when the absolute value of the negative correlation association relationship coefficient increases, an amplitude by which a value of the corresponding service parameter decreases is greater accordingly. In other words, generally, a larger absolute value of the association relationship coefficient may indicate larger association between an indicator parameter of a corresponding node and the service parameter of the sub-IVR flow. Certainly, a smaller absolute value of the association relationship coefficient may alternatively indicate larger association between an indicator parameter of a corresponding node and the service parameter of the sub-IVR flow. This is not specifically limited in this application. For ease of understanding, in this embodiment of this application, an example in which a larger absolute value of the association relationship coefficient indicates larger association between an indicator parameter of a corresponding node and the service parameter of the sub-IVR flow is used for description.

The to-be-optimized target node associated with the service parameter may be quickly and accurately determined based on the association relationship coefficient. For example, a node with an absolute value that is of an association relationship coefficient between an indicator parameter of a node and the service parameter and that is greater than a specified association relationship coefficient threshold may be determined as the to-be-optimized target node associated with the service parameter.

In this application, the target node may be determined based on the association relationship coefficient that may represent the association between the indicator parameter of the node and the service parameter, so that quickness and accuracy of determining the target node can be improved.

When the target node is determined based on the association relationship coefficient, the target node may be determined comprehensively from a plurality of dimensions based on the value of the indicator parameter. Specifically, a sorting ranking that may represent a degree of excellence of each node may be first obtained based on an association relationship coefficient corresponding to each indicator parameter and a value of an indicator parameter of each node. For ease of description, for example, an association relationship coefficient representing association between a specific indicator parameter (for example, an indicator parameter A) of each node and the service parameter may be referred to as an association relationship coefficient corresponding to the indicator parameter A. Similarly, for ease of description, the indicator parameter A may be referred to as an indicator parameter corresponding to the association relationship coefficient.

For example, when a value of an indicator parameter of a specific node is less ideal, and an association relationship coefficient corresponding to the indicator parameter is greater, it may be considered that settings of the node are more improper (worse) and it is more needed to optimize the node, and the node may be preferentially determined as a to-be-optimized target node. When a value of an indicator parameter of a specific node is more ideal, it may be considered that settings of the node are more proper (better), and it is less needed to optimize the node. The sorting ranking of the degree of excellence (to-be-optimized degree) of each node may be comprehensively determined depending on whether the value of the indicator parameter of each node is ideal and a value of an association relationship coefficient corresponding to an indicator parameter that has an unideal value. The degrees of excellence represented by the sorting rankings are not specifically limited in this application. For example, an earlier sorting ranking may indicate worse settings of a corresponding node and a higher need for optimization. A specified quantity of nodes with earlier sorting rankings may be determined as target nodes. Alternatively, a later sorting ranking may indicate worse settings of a corresponding node and a higher need for optimization. A specified quantity of nodes with later sorting rankings may be determined as target nodes.

The target node may be selected through comprehensive evaluation from a plurality of dimensions like the association relationship coefficient and the indicator parameter of the node, so that accuracy of determining the target node may be improved to the greatest extent. When the target node selected in the manner is adjusted, the value of the service parameter of the optimized target sub-IVR flow may be improved to the greatest extent, to achieve an objective of quickly and accurately optimizing the IVR flow.

To quickly and accurately obtain the sorting ranking that can represent the degree of excellence of each node, for each indicator parameter, the nodes may be first sorted based on a value of each node in the indicator parameter included in the target sub-IVR flow, so that a sorting sequence of the nodes in a dimension of the indicator parameter is obtained (for ease of description, the sorting sequence may be referred to as a sub-sorting sequence), and a sorting ranking of each node in the sub-sorting sequence may be obtained (for ease of description, the sorting ranking may be referred to as a sub-sorting ranking). Alternatively, for each indicator parameter, the nodes may be sorted based on a product (weighted value) of a value of each node in the indicator parameter and an association relationship coefficient corresponding to the indicator parameter, to obtain a sub-sorting ranking of each node in a dimension of the indicator parameter.

A manner in which the nodes in the sub-sorting sequence corresponding to the indicator parameter are sorted is not limited in embodiments of this application. For example, when a higher value of an indicator parameter of a node indicates that the value of the indicator parameter is less ideal, current settings of the node are more improper, and it is more needed to optimize the node, the nodes may be sorted in descending order of values of the indicator parameter, to obtain a sub-sorting sequence, and a node with an earlier ranking in the sub-sorting sequence may be preferentially determined as a to-be-optimized target node. For another example, when a lower value of an indicator parameter of a node indicates that the value of the indicator parameter is less ideal, current settings of the node are more improper, and it is more needed to optimize the node, the nodes may be sorted in ascending order of values of the indicator parameter, to obtain a sub-sorting sequence, and a node with an earlier ranking in the sub-sorting sequence may be preferentially determined as a to-be-optimized target node. It may be understood that, regardless of which manner is used, a node with an unideal value of an indicator parameter may be preferentially determined as the target node.

After a sub-sorting ranking of each node in a dimension of each indicator parameter is obtained, the target node may be comprehensively determined based on the sub-sorting ranking of each node in the dimension of each indicator parameter and an association relationship coefficient corresponding to each indicator parameter. For example, for each node, a weighted value of a sub-sorting ranking of the node in a dimension of each indicator parameter and a corresponding association relationship coefficient may be obtained, and the nodes may be comprehensively sorted based on weighted values, to obtain a comprehensive sorting sequence. A sorting ranking of each node in the comprehensive sorting sequence may be considered as a sorting ranking that can represent (reflect) a degree of excellence of each node. A specified quantity of to-be-optimized target nodes may be determined in a sequence of the nodes in the comprehensive sorting sequence, to preferentially determine a node that is highly correlated with the service parameter of the target sub-IVR flow and with an unideal (bad) value of an indicator parameter as the target node. A quantity (specified quantity) of determined target nodes is not specifically limited in this application. For example, the quantity may be 10, 8, or other values, and may be flexibly set based on a requirement.

For ease of understanding, the following describes, by using a specific embodiment, a process of determining a target node provided in embodiments of this application.

It is assumed that the target sub-IVR flow includes 11 nodes in total: a node 1, a node 2, a node 3, a node 4, a node 5, a node 6, a node 7, a node 8, a node 9, a node 10, and a node 11. The target node is determined from dimensions of three indicator parameters. The three indicator parameters are respectively represented as an indicator parameter 1, an indicator parameter 2, and an indicator parameter 3. An association relationship coefficient corresponding to the indicator parameter 1 is referred to as an association relationship coefficient 1 (also referred to as a weight 1), an association relationship coefficient corresponding to the indicator parameter 2 is referred to as an association relationship coefficient 2 (also referred to as a weight 2), and an association relationship coefficient corresponding to the indicator parameter 3 is referred to as an association relationship coefficient 3 (also referred to as a weight 3). For values of the indicator parameters of the nodes and values of association relationship coefficients corresponding to the indicator parameters, refer to Table 1. The values of the association relationship coefficients corresponding to the indicator parameters in Table 1 are merely examples for description. The association relationship coefficients corresponding to the indicator parameters may be the same, or may be different from each other. A sum of the association relationship coefficients corresponding to the indicator parameters may be a value like 1. This is not specifically limited in this application.

**Table 1**

| Node | Indicator parameter 1 | Association relationship coefficient 1 | Indicator parameter 2 | Association relationship coefficient 2 | Indicator parameter 3 | Association relationship coefficient 3 |
|---|---|---|---|---|---|---|
| Node 1 | 100 | 0.5 | 90 | 0.3 | 80 | 0.2 |
| Node 2 | 100 | 0.5 | 90 | 0.3 | 80 | 0.2 |
| Node 3 | 80 | 0.5 | 80 | 0.3 | 80 | 0.2 |
| Node 4 | 100 | 0.5 | 80 | 0.3 | 70 | 0.2 |
| Node 5 | 80 | 0.5 | 80 | 0.3 | 70 | 0.2 |
| Node 6 | 80 | 0.5 | 80 | 0.3 | 90 | 0.2 |
| Node 7 | 80 | 0.5 | 80 | 0.3 | 70 | 0.2 |
| Node 8 | 80 | 0.5 | 90 | 0.3 | 70 | 0.2 |
| Node 9 | 70 | 0.5 | 70 | 0.3 | 60 | 0.2 |
| Node 10 | 70 | 0.5 | 70 | 0.3 | 60 | 0.2 |
| Node 11 | 70 | 0.5 | 70 | 0.3 | 60 | 0.2 |

The nodes may be sorted based on values of each node in the indicator parameter 1, the indicator parameter 2, and the indicator parameter 3, to obtain sub-sorting sequences of the nodes in the dimensions of the indicator parameters. It is assumed that the nodes are sorted in descending order of values of the nodes in the indicator parameter 1, to obtain sub-sorting rankings of the nodes in a sub-sorting sequence in the dimension of the indicator parameter 1. It is assumed that, in the sub-sorting sequence in the dimension of the indicator parameter 1, sub-sorting rankings of the node 1, the node 2, and the node 4 are all 1 (where the node 1, the node 2, and the node 4 are ranked first in parallel), sub-sorting rankings of the node 3, the node 5, the node 6, the node 7, and the node 8 are all 2, and sub-sorting rankings of the node 9, the node 10, and the node 11 are all 3.

It is assumed that the nodes are sorted in descending order of values of the nodes in the indicator parameter 2, to obtain sub-sorting rankings of the nodes in a sub-sorting sequence in the dimension of the indicator parameter 2. It is assumed that, in the sub-sorting sequence in the dimension of the indicator parameter 2, sub-sorting rankings of the node 1, the node 2, and the node 8 are all 1, sub-sorting rankings of the node 3, the node 4, the node 5, the node 6, and the node 7 are all 2, and sub-sorting rankings of the node 9, the node 10, and the node 11 are all 3.

It is assumed that the nodes are sorted in ascending order of values of the nodes in the indicator parameter 3, to obtain sub-sorting rankings of the nodes in a sub-sorting sequence in the dimension of the indicator parameter 3. It is assumed that, in the sub-sorting sequence in the dimension of the indicator parameter 3, sub-sorting rankings of the node 9, the node 10, and the node 11 are all 1, sub-sorting rankings of the node 4, the node 5, the node 7, and the node 8 are all 2, sub-sorting rankings of the node 1, the node 2, and the node 3 are all 3, and a sub-sorting ranking of the node 6 is 4.

After the sub-sorting rankings of the nodes in the dimensions of the indicator parameters are obtained, for each node, a weighted value of sub-sorting rankings of the node in the dimensions of the indicator parameters and association relationship coefficients corresponding to the indicator parameters may be obtained. For example, for the node 1, the sub-sorting ranking of the node 1 in the dimension of the indicator parameter 1 is 1, and an association relationship coefficient corresponding to the indicator parameter 1 is 0.5; the sub-sorting ranking of the node 1 in the dimension of the indicator parameter 2 is 1, and an association relationship coefficient corresponding to the indicator parameter 2 is 0.3; and the sub-sorting ranking of the node 1 in the dimension of the indicator parameter 3 is 3, and an association relationship coefficient corresponding to the indicator parameter 3 is 0.2. Therefore, a weighted value of the sub-sorting rankings of the node 1 in the dimensions of the indicator parameters and corresponding association relationship coefficients is 1×0.5+1×0.3+3×0.2=1.4.

A weighted value of each node may be calculated in a same calculation manner. For example, a weighted value of the sub-sorting rankings of the node 2 in the dimensions of the indicator parameters and corresponding association relationship coefficients is 1×0.5+1×0.3+3×0.2=1.4.

A weighted value of the sub-sorting rankings of the node 3 in the dimensions of the indicator parameters and corresponding association relationship coefficients is 2×0.5+2×0.3+3×0.2=2.2.

A weighted value of the sub-sorting rankings of the node 4 in the dimensions of the indicator parameters and corresponding association relationship coefficients is 1×0.5+2×0.3+2×0.2=1.5.

A weighted value of the sub-sorting rankings of the node 5 in the dimensions of the indicator parameters and corresponding association relationship coefficients is 2×0.5+2×0.3+2×0.2=2.

A weighted value of the sub-sorting rankings of the node 6 in the dimensions of the indicator parameters and corresponding association relationship coefficients is 2×0.5+2×0.3+4×0.2=2.4.

A weighted value of the sub-sorting rankings of the node 7 in the dimensions of the indicator parameters and corresponding association relationship coefficients is 2×0.5+2×0.3+4×0.2=2.4.

A weighted value of the sub-sorting rankings of the node 8 in the dimensions of the indicator parameters and corresponding association relationship coefficients is 2×0.5+1×0.3+2×0.2=1.7.

A weighted value of the sub-sorting rankings of the node 9 in the dimensions of the indicator parameters and corresponding association relationship coefficients is 3×0.5+3×0.3+1×0.2=2.6.

A weighted value of the sub-sorting rankings of the node 10 in the dimensions of the indicator parameters and corresponding association relationship coefficients is 3×0.5+3×0.3+1×0.2=2.6.

A weighted value of the sub-sorting rankings of the node 11 in the dimensions of the indicator parameters and corresponding association relationship coefficients is 3×0.5+3×0.3+1×0.2=2.6.

It is assumed that when a weighted value of a node obtained in the calculation manner is smaller, it is considered that a correlation between the node and the service parameter of the target sub-IVR flow is higher, and a value of an indicator parameter is less ideal (worse). The nodes may be comprehensively sorted in ascending order of the weighted values, to obtain a comprehensive sorting sequence. Sorting rankings that can represent degrees of excellence of the nodes are obtained based on sorting rankings of the nodes in the comprehensive sorting sequence. A specified quantity of nodes with earlier sorting rankings may be determined as target nodes in an order from the earliest one to the latest one of the nodes in the comprehensive sorting sequence. For example, assuming that five target nodes are selected in total, the node 1, the node 2, the node 4, the node 8, and the node 5 may be separately determined as the target nodes.

Certainly, the nodes may alternatively be comprehensively sorted in descending order of the weighted values, to obtain a comprehensive sorting sequence. A specified quantity of nodes with later sorting rankings are determined as the target nodes in an order from the latest one to the earliest one of the nodes in the comprehensive sorting sequence. This is not specifically limited in this application.

In this application, the sub-sorting ranking that can represent a degree of excellence of each node may be accurately obtained based on each association relationship coefficient and a sub-sorting ranking of each node in each indicator parameter, so that accuracy of determining the to-be-optimized target node can be improved. When the target node selected in the manner is adjusted, the value of the service parameter of the optimized target sub-IVR flow may be improved to the greatest extent, to quickly and accurately optimize the IVR flow.

Step 303: The apparatus 100 in which the flow optimization module is located selects a target optimization solution from an optimization solution set, where the target optimization solution is used for optimizing the target node.

The operation management personnel or the like can preconfigure the optimization solution set. The optimization solution set may include several optimization solutions that may be used for optimizing nodes of different sub-IVR flows. The apparatus 100 in which the flow optimization module is located may obtain the optimization solution set, and may select, from the optimization solution set, the target optimization solution that may be for optimizing the target node in the target sub-IVR flow. For example, each optimization solution in the optimization solution set may correspond to identification information of a sub-IVR flow and a node to which the optimization solution is applicable. The apparatus 100 in which the flow optimization module is located may select, from the optimization solution set based on the identification information, an optimization solution applicable to the target node in the target sub-IVR flow, and determine the optimization solution as the target optimization solution.

To quickly and accurately determine the target optimization solution, a correspondence between an indicator parameter of a node of a sub-IVR flow and an optimization solution may be pre-obtained. When selecting the target optimization solution from the optimization solution set, the apparatus 100 in which the flow optimization module is located may compare and match a value of an indicator parameter of the target node of the target sub-IVR flow with a value of an indicator parameter in the correspondence (the correspondence between an indicator parameter of a node of a sub-IVR flow and an optimization solution). An optimization solution included in the successfully matched correspondence is used as an optimization solution corresponding to the value of the indicator parameter of the target node of the target sub-IVR flow in the optimization solution set, and the optimization solution may be determined as the target optimization solution.

The target optimization solution determined in this application is an optimization solution corresponding to the value of the indicator parameter of the target node of the target sub-IVR flow in the optimization solution set. Therefore, the target optimization solution may be better applicable to the target node. When the target node in the target sub-IVR flow is optimized based on the target optimization solution, an objective of optimizing the target sub-IVR flow may be achieved to the greatest extent.

The correspondence between an indicator parameter of a node of a sub-IVR flow and an optimization solution may be obtained based on a trained optimization solution library model. For example, a value of an indicator parameter of a node of any sub-IVR flow may be input into the trained optimization solution library model. The optimization solution library model may perform an operation on the input indicator parameter of the node of the sub-IVR flow, to determine an optimization solution corresponding to the value of the input indicator parameter of the node of the sub-IVR flow. A training process of the optimization solution library model may be performed by an apparatus in which a model training module (for ease of description, referred to as a second model training module) is located. The apparatus in which the second model training module is located and the apparatus 100 in which the flow optimization module is located may be a same apparatus, or may be different apparatuses. In addition, the apparatus in which the second model training module is located and the apparatus in which the first model training module is located may be a same apparatus, or may be different apparatuses. This is not specifically limited in this application. The training process of the optimization solution library model may be as follows:

The apparatus in which the second model training module is located obtains values of a sample indicator parameter of several nodes of any sub-IVR flow in the sample set. The sample indicator parameter corresponds to an optimization solution sample label that is applicable to the values of the sample indicator parameter of the several nodes of the sub-IVR flow. The optimization solution sample label may be obtained in a manner of manual marking by the operation management personnel or the like. A specific process of the optimization solution sample label is not specifically limited in this application.

The apparatus in which the second model training module is located may input the obtained values of the sample indicator parameter of the several nodes of the sub-IVR flow into a to-be-trained optimization solution library model. The optimization solution library model performs an operation on the values of the input sample indicator parameter of the several nodes of the sub-IVR flow, to determine an optimization solution applicable to the values of the sample indicator parameter of the several nodes of the sub-IVR flow, and outputs an optimization solution identification label. The apparatus in which the second model training module is located may train the to-be-trained optimization solution library model based on the optimization solution identification label output by the optimization solution library model and the optimization solution sample label corresponding to the sample indicator parameter.

For example, the apparatus in which the second model training module is located may determine, depending on whether the optimization solution identification label is consistent with the optimization solution sample label, whether an identification result of the optimization solution library model is accurate. In specific implementation, if the optimization solution identification label is inconsistent with the optimization solution sample label, it may be considered that the identification result of the optimization solution library model is inaccurate, and a parameter of the optimization solution library model may be adjusted, to train the optimization solution library model. Optionally, when the parameter of the optimization solution library model is adjusted, a gradient descent algorithm may be used to perform backpropagation or the like on a gradient of the parameter of the optimization solution library model, to adjust the parameter of the optimization solution library model. The operation may be performed on the sample indicator parameter of a node of each sub-IVR flow in the sample set. When a preset convergence condition is satisfied, it is determined that the training of the optimization solution library model is completed.

That the preset convergence condition is satisfied may be as follows: A quantity of optimization solutions that are accurately identified, through the optimization solution library model, to be applicable to the sample indicator parameter of the node of the sub-IVR flow in the sample set is greater than a specified quantity, a quantity of iterations of training the optimization solution library model reaches a specified maximum quantity of iterations, or the like. In specific implementation, setting may be flexibly performed, and is not specifically limited herein.

In this embodiment of this application, a correspondence between an indicator parameter of a node of a sub-IVR flow and an optimization solution may be quickly and accurately obtained based on the trained optimization solution library model. Based on the correspondence, accuracy of determining the target optimization solution can be improved, to improve quickness and accuracy of optimizing the IVR flow.

The apparatus 100 in which the flow optimization module is located may obtain, based on the optimization solution library model, one or more optimization solutions corresponding to the value of the indicator parameter of the target node of the target sub-IVR flow, and may respectively use these optimization solutions as candidate solutions. The candidate solutions may carry priority information, and the target optimization solution may be determined (selected) from the candidate solutions based on the priority information. For example, priority information carried in any candidate solution may include a priority coefficient or a priority level at which the candidate solution is applicable to the target sub-IVR flow. A specific priority coefficient and a specific priority level are not specifically limited in this application. A higher priority coefficient or priority level may indicate that the candidate solution is more applicable to the target sub-IVR flow. Certainly, a lower priority coefficient or priority level may indicate that the candidate solution is more applicable to the target sub-IVR flow. The apparatus 100 in which the flow optimization module is located may select, from the candidate solutions based on the priority information carried in the candidate solutions, a solution most applicable to the target sub-IVR flow as the target optimization solution.

To improve flexibility and accuracy of determining the target optimization solution, in an early stage of running the optimization solution library model, or the like, the apparatus 100 in which the flow optimization module is located may determine one or more optimization solutions that are obtained based on the optimization solution library model and that correspond to the value of the indicator parameter of the target node of the target sub-IVR flow as candidate solutions, and may display the candidate solutions. The operation management personnel (for ease of description, also referred to as a user) select a solution from the candidate solutions as the target optimization solution, or the operation management personnel may modify a specific candidate solution. The apparatus 100 in which the flow optimization module is located may identify the candidate solution selected by the operation management personnel (the user) or a candidate solution modified by the user, and may determine the candidate solution selected by the user or the candidate solution modified by the user as the target optimization solution.

In this embodiment of this application, the target optimization solution may be determined based on the candidate solution selected by the user or the candidate solution modified by the user, to improve flexibility and accuracy of determining the target optimization solution.

Step 304: The apparatus 100 in which the flow optimization module is located optimizes the target sub-IVR flow based on the target optimization solution.

After the target optimization solution is determined, the apparatus 100 in which the flow optimization module is located may optimize the target sub-IVR flow based on the target optimization solution. For example, the flow optimization module 101 in the apparatus 100 in which the flow optimization module is located may generate an optimization operation instruction for the target node based on adjustment information of the node in the target sub-IVR flow included in the target optimization solution, and drive (invoke), through interface invoking or the like, the IVR orchestration tool module 103 in the apparatus 100 in which the flow optimization module is located. The IVR orchestration tool module 103 adjusts (optimizes), based on the IVR orchestration tool and the optimization operation instruction, a node button ranking, voice playing content, and the like included in the target sub-IVR flow, to optimize the target sub-IVR flow automatically and intelligently. In comparison with a related technology in which IVR flow customization development personnel, service management personnel who master an IVR flow orchestration technology, or the like is further needed, and the service management personnel need to have some working experience to manually orchestrate and optimize the IVR flow based on a service processing logic requirement in the optimization solution, in this embodiment of this application, a manner of automatically and intelligently optimizing the target sub-IVR flow may not depend on manual work or manual work experience, to reduce labor costs and improve efficiency.

In this embodiment of this application, the apparatus 100 in which the flow optimization module is located may intelligently determine the to-be-optimized target sub-IVR flow from the sub-IVR flows based on the value of the service parameter of each sub-IVR flow and the reference value of the service parameter. When optimizing the to-be-optimized target sub-IVR flow, the apparatus 100 in which the flow optimization module is located may first determine, from the plurality of nodes included in the target sub-IVR flow, the target node associated with the service parameter, select, from the optimization solution set, the target optimization solution that may be used for optimizing the target node, and optimize the target sub-IVR flow based on the target optimization solution, to achieve an objective of quickly and conveniently optimizing the IVR flow.

After optimizing the target sub-IVR flow based on the target optimization solution, a comparative test may further be performed on an optimized target sub-IVR flow and the target sub-IVR flow before optimization. For example, the flow optimization module 101 may drive the IVR running environment providing tool module 104. The IVR running environment providing tool module 104 loads and runs the optimized target sub-IVR flow based on an IVR flow running environment providing tool, may record an access log of the customer to the optimized target sub-IVR flow, and the like. The report statistical tool module 102 may collect and analyze the access logs of the customer accessing the optimized target sub-IVR flow, and display a value of a service parameter of the optimized target sub-IVR flow. The flow optimization module 101 may obtain the value of the service parameter of the target sub-IVR flow, and compare the value of the service parameter of the optimized target sub-IVR flow with a value of a service parameter of the target sub-IVR flow before optimization after same running duration, to obtain a test result of the comparative test. When the test result of the comparative test shows that the value of the service parameter of the optimized target sub-IVR flow is better than the value of the service parameter of the target sub-IVR flow before optimization, it may be considered that the optimized target sub-IVR flow has achieved a specific optimization effect, and the optimized target sub-IVR flow may be used.

In addition, if the value of the service parameter of the optimized target sub-IVR flow is better than the value of the service parameter of the target sub-IVR flow before optimization, and reaches the reference value corresponding to the service parameter, it may be considered that the target sub-IVR flow achieves the optimization objective.

If the value of the service parameter of the optimized target sub-IVR flow is only better than the value of the service parameter of the target sub-IVR flow before optimization, but does not reach the reference value corresponding to the service parameter, it may be considered that the target sub-IVR flow has only a specific optimization objective, and needs to be further optimized to achieve the optimization objective. The optimized target sub-IVR flow may be determined as the to-be-optimized target sub-IVR flow in step 301, and the optimized target sub-IVR flow is further optimized based on steps in step 302 to step 304, until a value of a service parameter of a finally optimized target sub-IVR flow reaches the reference value corresponding to the service parameter, in other words, the optimization objective is achieved. Details are not described herein again.

To continuously accumulate experience and continuously optimize the correspondence that is between an indicator parameter of a node of a sub-IVR flow and an optimization solution and that is obtained based on the optimization solution library model or the like, the apparatus 100 in which the flow optimization module is located may perform optimization training on the optimization solution library model or the like based on the test result of the comparative test, so that the correspondence that is between an indicator parameter of a node of a sub-IVR flow and an optimization solution and that is obtained based on the optimization solution library model can be optimized and updated. For example, the priority information carried in the target optimization solution that is obtained based on the optimization solution library model and that corresponds to the value of the indicator parameter of the target node of the target sub-IVR flow may be updated. For example, if the value of the service parameter of the optimized target sub-IVR flow is better than the value of the service parameter of the target sub-IVR flow before optimization, and reaches the reference value corresponding to the service parameter, the target optimization solution may be determined as an optimization solution most applicable to the target sub-IVR flow, and a priority coefficient or a priority level of the target optimization solution may be set as a highest priority coefficient or a highest priority level for being most applicable to the target sub-IVR flow.

If the value of the service parameter of the optimized target sub-IVR flow is only better than the value of the service parameter of the target sub-IVR flow before optimization, but does not reach the reference value corresponding to the service parameter, a priority coefficient or a priority level of the target optimization solution may be set as a second highest priority coefficient or a second highest priority level for being applicable to but not most applicable to the target sub-IVR flow. This may be flexibly set based on a requirement.

When a higher value of a specific service parameter indicates more proper settings of a corresponding IVR flow, it may be considered that when the value of the service parameter of the optimized target sub-IVR flow is greater than the value of the service parameter of the target sub-IVR flow before optimization, the value of the service parameter of the optimized target sub-IVR flow is better than the value of the service parameter of the target sub-IVR flow before optimization; or when the value of the service parameter of the optimized target sub-IVR flow is less than the value of the service parameter of the target sub-IVR flow before optimization, the value of the service parameter of the optimized target sub-IVR flow is worse than the value of the service parameter of the target sub-IVR flow before optimization.

When a lower value of a specific service parameter indicates more proper settings of a corresponding IVR flow, it may be considered that when the value of the service parameter of the optimized target sub-IVR flow is less than the value of the service parameter of the target sub-IVR flow before optimization, the value of the service parameter of the optimized target sub-IVR flow is better than the value of the service parameter of the target sub-IVR flow before optimization; or when the value of the service parameter of the optimized target sub-IVR flow is greater than the value of the service parameter of the target sub-IVR flow before optimization, the value of the service parameter of the optimized target sub-IVR flow is worse than the value of the service parameter of the target sub-IVR flow before optimization.

In addition, assuming that the test result of the comparative test shows that the value of the service parameter of the optimized target sub-IVR flow is worse than the value of the service parameter of the target sub-IVR flow before optimization, it may be considered that the optimized target sub-IVR flow does not have an effect of optimizing the target sub-IVR flow, and may have a reverse effect instead. The apparatus 100 in which the flow optimization module is located may restore a currently used target sub-IVR flow (for example, the optimized target sub-IVR flow that is used) to the target sub-IVR flow before optimization. In addition, to optimize a pre-obtained optimization solution library model and optimize the correspondence that is between an indicator parameter of a node of a sub-IVR flow and an optimization solution and that is obtained based on the optimization solution library model and the like, the priority coefficient or the priority level of the target optimization solution may be configured as a lowest priority coefficient or a lowest priority level for being not applicable to the target sub-IVR flow, or the target optimization solution may be directly removed from the correspondence and excluded from the candidate solutions. In addition, after the currently used target sub-IVR flow is restored to the target sub-IVR flow before optimization, the target sub-IVR flow before optimization may be re-determined as the to-be-optimized target sub-IVR flow in step 301, and the target sub-IVR flow is further optimized based on steps in step 302 to step 304, until the value of the service parameter of the finally optimized target sub-IVR flow reaches the reference value corresponding to the service parameter, and the optimization objective is achieved. Details are not described herein again.

Similar to the process of performing optimization training on the optimization solution library model, to continuously optimize the association relationship model, continuously accumulate experience, and improve an optimization effect of the IVR flow, the apparatus 100 in which the flow optimization module is located may obtain association relationship coefficients (for ease of description, the association relationship coefficients are referred to as reference association relationship coefficients) between indicator parameters of the nodes in the target sub-IVR flow and service parameters of the target sub-IVR flow based on a value of a service parameter and a value of an indicator parameter of a node that correspond to each of the optimized target sub-IVR flow and the target sub-IVR flow before optimization and that are included in the test result, and optimize and update the obtained association relationship between the service parameter of the sub-IVR flow and the indicator parameter of the node based on the reference association relationship coefficient. For example, it is assumed that the association relationship obtained based on the association relationship model includes: Association relationships exist between a service parameter A and a node C1, a node C2, and a node C3 in the target sub-IVR flow, and an association relationship coefficient between the service parameter A and the node C1 is 0.5, an association relationship coefficient between the service parameter A and the node C2 is 0.6, and an association relationship coefficient between the service parameter A and the node C3 is -0.7. The reference association relationship coefficients obtained based on the value of the service parameter and the value of the indicator parameter of the node that correspond to each of the optimized target sub-IVR flow and the target sub-IVR flow before optimization and that are included in the test result include: The association relationship coefficient between the service parameter A and the node C1 is not 0.5 but 0.8, the association relationship coefficient between the service parameter A and the node C2 is not 0.6 but 0.7, the association relationship coefficient between the service parameter A and the node C3 is still -0.7, and an association relationship coefficient between the service parameter A and a node C4 is 0.7. In this case, optimization training may be performed on the association relationship model based on the newly obtained reference association relationship coefficients, so that the association relationship model may learn information about the association relationships between the service parameter A and not only the node C1, the node C2, and the node C3 in the target sub-IVR flow, but also the node C4 in the target sub-IVR flow. In addition, the association relationship model may learn these specific association relationship coefficients as follows: The association relationship coefficient between the service parameter A and the node C1 is 0.8, the association relationship coefficient between the service parameter A and the node C2 is 0.7, the association relationship coefficient between the service parameter A and the node C3 is -0.7, and the association relationship coefficient between the service parameter A and the node C4 is 0.7. Therefore, an optimized and trained association relationship model may provide more accurate information about the association relationship between the service parameter of the sub-IVR flow and the indicator parameter of the node based on these detailed association relationship coefficients.

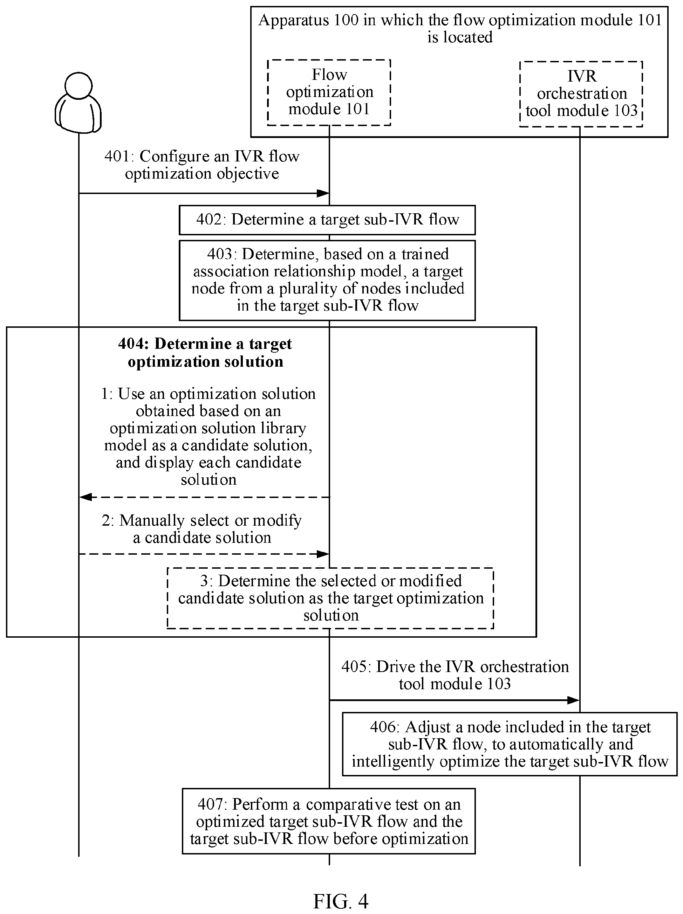

For ease of understanding, the following describes, by using a specific embodiment, the flow optimization method provided in this application. FIG. 4 is a diagram of a process of another flow optimization method according to an embodiment of this application. The method includes the following steps.

Step 401: Operation management personnel configure an IVR flow optimization objective in an apparatus 100 in which a flow optimization module 101 is located.

For ease of understanding, the following uses an example in which the IVR flow optimization objective configured by the operation management personnel as follows: An IVR first contact resolution is increased to 30% (in other words, a reference value of the IVR first contact resolution is 30%), and a preset weight of the IVR first contact resolution is 50%; and an IVR flow distribution rate is increased to 80% (in other words, a reference value of the IVR flow distribution rate is 80%), and a preset weight of the IVR flow distribution rate is 50% for description.

Step 402: The flow optimization module 101 obtains a value of an IVR first contact resolution and an IVR flow distribution rate of each sub-IVR flow in an IVR flow in a target period. For each sub-IVR flow, a difference (for ease of description, referred to as a first difference) between a value of an IVR first contact resolution of the sub-IVR flow and the reference value 30% of the IVR first contact resolution configured by the operation management personnel, and a difference (for ease of description, referred to as a second difference) between a value of an IVR flow distribution rate of the sub-IVR flow and the reference value 80% of the IVR flow distribution rate configured by the operation management personnel are collected, and a multidimensional weighted value of the sub-IVR flow is collected as follows: First difference×50%+Second difference×50%.

A difference between the multidimensional weighted value of the sub-IVR flow and a reference weighted value (30%×50%+80%×50%) is collected, and a sub-IVR flow with a greatest difference between a multidimensional weighted value and the reference weighted value is determined as a target sub-IVR flow.

Step 403: The flow optimization module 101 determines, from a plurality of nodes included in the target sub-IVR flow based on a trained association relationship model, a target node that is in the target sub-IVR flow and that is associated with a service parameter.

Step 404: The flow optimization module 101 generates (determines), based on a trained optimization solution library model, a target optimization solution that may be used for optimizing the target node.

In an initial running stage of the optimization solution library model and the association relationship model, the operation management personnel may assist in determining the target optimization solution. The following describes a manner in which the operation management personnel assist in determining the target optimization solution provided in this embodiment of this application.

Step 1: The flow optimization module 101 may use an optimization solution obtained based on the optimization solution library model as a candidate solution, and display each candidate solution.

Step 2: The operation management personnel can manually select or modify the candidate solution.

Step 3: The flow optimization module 101 may determine the candidate solution selected by a user (the operation management personnel) or a candidate solution modified by a user (the operation management personnel) as the target optimization solution.

The step in which the operation management personnel assist in determining the target optimization solution may be an optional step. For example, in the initial running stage of the optimization solution library model and the association relationship model, the operation management personnel may assist in determining the target optimization solution, and may continuously optimize the optimization solution library model and the association relationship model. Subsequently, after accuracy of the optimization solution library model and the association relationship model is high, the operation management personnel may not assist in determining the target optimization solution, and the target optimization solution may be directly determined based on the optimization solution library model.

Step 405: The flow optimization module 101 generates an optimization operation instruction for the target node based on adjustment information that is of the node in the target sub-IVR flow and that is included in the target optimization solution, and drives (invokes) an IVR orchestration tool module 103.

Step 406: The IVR orchestration tool module 103 adjusts (optimizes) the node included in the target sub-IVR flow based on a configured IVR orchestration tool and the optimization operation instruction, to automatically and intelligently optimize the target sub-IVR flow.

The adjusted node in the target sub-IVR flow may include another node other than the target node. This is not specifically limited in this application.

Step 407: The flow optimization module 101 performs a comparative test on an optimized target sub-IVR flow and the target sub-IVR flow before optimization.

The following describes a manner (not shown in the figure) of performing the comparative test on the optimized target sub-IVR flow and the target sub-IVR flow before optimization provided in this embodiment of this application.

If a value of a service parameter of the optimized target sub-IVR flow is worse than a value of a service parameter of the target sub-IVR flow before optimization in a test result, a currently used target sub-IVR flow is restored to the target sub-IVR flow before optimization. If a value of a service parameter of the optimized target sub-IVR flow is better than a value of a service parameter of the target sub-IVR flow before optimization in a test result, the optimized target sub-IVR flow is used.

In addition, a reference association relationship coefficient between an indicator parameter of each node in the target sub-IVR flow and each service parameter of the target sub-IVR flow may be obtained based on a value of a service parameter and a value of an indicator parameter of a node that correspond to each of the optimized target sub-IVR flow and the target sub-IVR flow before optimization and that are included in the test result. The association relationship model is optimized and updated based on the reference association relationship coefficient, in other words, the association relationship that is obtained based on the association relationship model and that is between the service parameter of the sub-IVR flow and the indicator parameter of the node may be optimized and updated.

The optimization solution library model may also be optimized and updated based on the test result, in other words, the correspondence that is between an indicator parameter of a node of a sub-IVR flow and an optimization solution and that is obtained based on the optimization solution library model may be optimized and updated.

In addition, it is verified through an experiment that, according to the flow optimization method provided in this embodiment of this application, the IVR first contact resolution may be improved by about 5% to 10% and the IVR flow distribution rate may be improved by about 10% within six-month running time of an IVR flow of a call center.

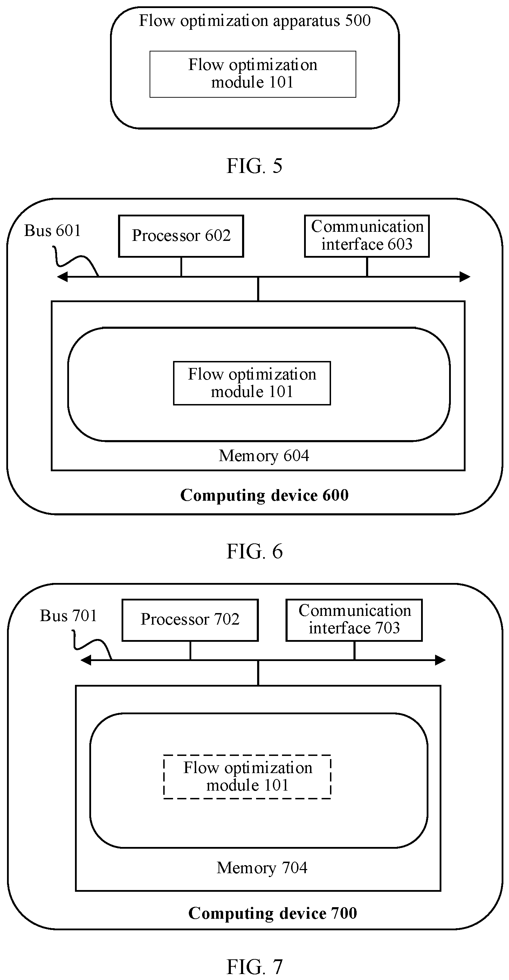

Based on a same inventive concept as the method embodiments, an embodiment of this application further provides a flow optimization apparatus. The flow optimization apparatus is configured to perform the method performed by the apparatus 100 in which the flow optimization module is located in the foregoing method embodiments. As shown in FIG. 5, a flow optimization apparatus 500 includes a flow optimization module 101. The flow optimization module 101 may obtain a value of at least one service parameter of each sub-IVR flow in an IVR flow in a target period, and determine a target sub-IVR flow from the sub-IVR flows based on a value of each service parameter and a reference value corresponding to each service parameter; determine, from a plurality of nodes included in the target sub-IVR flow, a target node that is in the target sub-IVR flow and that is associated with the service parameter; select a target optimization solution from an optimization solution set, where the target optimization solution is used for optimizing the target node; and optimize the target sub-IVR flow based on the target optimization solution.

In a possible implementation, the flow optimization module 101 may determine the target node based on a pre-obtained association relationship between a service parameter of a sub-IVR flow and an indicator parameter of a node.

In a possible implementation, the flow optimization module 101 may obtain association relationship coefficients based on the pre-obtained association relationship between the service parameter of the sub-IVR flow and the indicator parameter of the node, where the association relationship coefficients all represent association between any indicator parameter of each node included in the target sub-IVR flow and the service parameter; and may determine the target node based on each association relationship coefficient.

In a possible implementation, the flow optimization module 101 may obtain, based on each association relationship coefficient and a value of an indicator parameter of each node included in a target sub-IVR flow, a sorting ranking representing a degree of excellence of each node; and determine a specified quantity of to-be-optimized target nodes from the nodes based on sorting rankings of the nodes.

In a possible implementation, the flow optimization module 101 may obtain, for each indicator parameter based on a value of each node in the indicator parameter, a sub-sorting ranking of each node in the indicator parameter; and may obtain, based on each association relationship coefficient and the sub-sorting ranking of each node, the sorting ranking representing the degree of excellence of each node.

In a possible implementation, the association relationship between the service parameter of the sub-IVR flow and the indicator parameter of the node is obtained based on a trained association relationship model, and the association relationship model may determine, based on an input service parameter of a sub-IVR flow, an indicator parameter that is of a node and that is associated with the input service parameter of the sub-IVR flow.

In a possible implementation, the flow optimization module 101 may determine, based on a pre-obtained correspondence between an indicator parameter of a node of a sub-IVR flow and an optimization solution, an optimization solution that is in the optimization solution set and that corresponds to a value of an indicator parameter of the target node of the target sub-IVR flow as the target optimization solution.

In a possible implementation, the flow optimization module 101 may determine at least one optimization solution that is in the optimization solution set and that corresponds to the value of the indicator parameter of the target node of the target sub-IVR flow as a candidate solution, and displaying each candidate solution; and determine the target optimization solution based on a candidate solution selected by a user or a candidate solution modified by a user.

In a possible implementation, the correspondence between the indicator parameter of the node of the sub-IVR flow and the optimization solution is obtained based on a trained optimization solution library model, and the optimization solution library model may determine, based on a value of an input indicator parameter of a node of a sub-IVR flow, an optimization solution corresponding to the value of the input indicator parameter of the node of the sub-IVR flow.

In a possible implementation, for each sub-IVR flow, the flow optimization module 101 may collect a difference between a value of each service parameter of the sub-IVR flow and a reference value of the corresponding service parameter, and collect a weighted value between a preset weight of each service parameter of the sub-IVR flow and the corresponding difference; and determine the target sub-IVR flow from the sub-IVR flows based on the weighted value of each sub-IVR flow and a reference weighted value between the reference value and the preset weight of each service parameter.

In a possible implementation, the flow optimization module 101 may further perform a comparative test on an optimized target sub-IVR flow and the target sub-IVR flow before optimization, and if a value of a service parameter of the optimized target sub-IVR flow is worse than a value of a service parameter of the target sub-IVR flow before optimization in a test result, restore a currently used target sub-IVR flow to the target sub-IVR flow before optimization; or if a value of a service parameter of the optimized target sub-IVR flow is better than a value of a service parameter of the target sub-IVR flow before optimization in a test result, use the optimized target sub-IVR flow.

In a possible implementation, the flow optimization module 101 may further obtain a reference association relationship coefficient between an indicator parameter of each node in the target sub-IVR flow and each service parameter of the target sub-IVR flow based on a value of a service parameter and a value of an indicator parameter of a node that correspond to each of the optimized target sub-IVR flow and the target sub-IVR flow before optimization and that are included in the test result; and optimize and update the obtained association relationship between the service parameter of the sub-IVR flow and the indicator parameter of the node based on the reference association relationship coefficient.

In a possible implementation, the flow optimization module 101 may further optimize and update the obtained correspondence between the indicator parameter of the node of the sub-IVR flow and the optimization solution based on the test result.

Division into modules in this embodiment of this application is an example, is only logical function division, and may be other division during actual implementation. In addition, functional modules in embodiments of this application may be integrated into one processor, each of the modules may exist alone physically, or two or more modules may be integrated into one module. The integrated module may be implemented in a form of hardware, or may be implemented in a form of a software functional module.

If the integrated module is implemented in a form of a software functional module and is sold or used as an independent product, the integrated module may be stored in a computer-readable storage medium. Based on such an understanding, the technical solutions of this application essentially, or the part contributing to the conventional technology, or all or some of the technical solutions may be embodied in a form of a software product. The computer software product is stored in a storage medium, and includes several instructions for instructing a terminal device (which may be a personal computer, a mobile phone, a network device, or the like) or a processor (processor) to perform all or some steps of the method in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

This application further provides a computing device 600 shown in FIG. 6. The computing device 600 includes a bus 601, a processor 602, a communication interface 603, and a memory 604. The processor 602, the memory 604, and the communication interface 603 communicate with each other via the bus 601.

The processor 602 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like.

The memory 604 may use a dynamic random access memory (dynamic random access memory, DRAM). In addition to the DRAM, the memory 604 may alternatively be another random access memory, for example, a static random access memory (Static random access memory, SRAM). In addition, the memory 602 may alternatively be a read-only memory (read-only memory, ROM). For example, the read-only memory may be a programmable read-only memory (programmable read-only memory, PROM), an erasable programmable read-only memory (erasable programmable read-only memory, EPROM), or the like. The memory 604 may alternatively be a flash medium (FLASH), a hard disk drive (hard disk drive, HDD), a solid-state drive (solid-state drive, SSD), or the like. The memory 604 stores computer program instructions, and the processor 602 executes the computer program instructions to perform the steps performed by the apparatus 100 in which the flow optimization module is located in the methods in FIG. 3 and FIG. 4. The memory 604 may further include another software module, such as an operating system, needed for running a process. The operating system may be LINUX^{™}, UNIX^{™}, WINDOWS^{™}, or the like.

This application further provides a computing device system. The computing device system includes at least one computing device 700 shown in FIG. 7. The computing device 700 includes a bus 701, a processor 702, a communication interface 703, and a memory 704. The processor 702, the memory 704, and the communication interface 703 communicate with each other via the bus 701. The at least one computing device 700 in the computing device system performs communication through a communication path.

For specific types of the processor 702 and the memory 704, refer to the related descriptions of the processor 602 and the memory 604. Details are not described herein again. The processor 702 executes computer program instructions stored in the memory 704, to perform some or all of the steps performed by the apparatus 100 in which the flow optimization module is located in the methods in FIG. 3 and FIG. 4. The memory may further include another software module, such as an operating system, needed for running a process. The operating system may be LINUX^{™}, UNIX^{™}, WINDOWS^{™}, or the like.

The at least one computing device 700 in the computing device system establishes communication with each other via a communication network, and each computing device 700 runs any one or more modules in the flow optimization apparatus 500.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or one or more blocks in the block diagrams. It is clear that a person skilled in the art can make various modifications and variations to this application without departing from the scope of this application. In this case, if the modifications and variations made to this application fall within the scope of the claims of this application and equivalent technologies thereof, this application is intended to cover these modifications and variations.

## Claims

1. A flow optimization method, comprising:
obtaining a value of at least one service parameter of each sub-interactive voice response IVR flow in an IVR flow in a target period, and determining a target sub-IVR flow from the sub-IVR flows based on a value of each service parameter and a reference value corresponding to each service parameter;
determining, from a plurality of nodes comprised in the target sub-IVR flow, a target node that is in the target sub-IVR flow and that is associated with the service parameter;
selecting a target optimization solution from an optimization solution set, wherein the target optimization solution is used for optimizing the target node; and
optimizing the target sub-IVR flow based on the target optimization solution.

2. The method according to claim 1, wherein the determining, from the plurality of nodes comprised in the target sub-IVR flow, the target node that is in the target sub-IVR flow and that is associated with the service parameter comprises:
determining the target node based on a pre-obtained association relationship between a service parameter of a sub-IVR flow and an indicator parameter of a node.

3. The method according to claim 2, wherein the determining the target node based on the pre-obtained association relationship between the service parameter of the sub-IVR flow and the indicator parameter of the node comprises:
obtaining each association relationship coefficient based on the association relationship, wherein any association relationship coefficient represents association between any indicator parameter of each node comprised in the target sub-IVR flow and the service parameter; and
determining the target node based on each association relationship coefficient.

4. The method according to claim 3, wherein the determining the target node based on the association relationship coefficient comprises:
obtaining, based on each association relationship coefficient and a value of an indicator parameter of each node, a sorting ranking representing a degree of excellence of each node; and
determining a specified quantity of target nodes from the nodes based on sorting rankings of the nodes.

5. The method according to claim 4, wherein the obtaining, based on each association relationship coefficient and the value of the indicator parameter of each node, the sorting ranking representing the degree of excellence of each node comprises:
for each indicator parameter, obtaining, based on a value of each node in the indicator parameter, a sub-sorting ranking of each node in the indicator parameter; and
obtaining, based on each association relationship coefficient and the sub-sorting ranking of each node, the sorting ranking representing the degree of excellence of each node.

6. The method according to claim 2, wherein the association relationship between the service parameter of the sub-IVR flow and the indicator parameter of the node is obtained based on a trained association relationship model, and the association relationship model is used to determine, based on an input service parameter of a sub-IVR flow, an indicator parameter that is of a node and that is associated with the input service parameter of the sub-IVR flow.

7. The method according to claim 1, wherein the selecting the target optimization solution from the optimization solution set comprises:
determining, based on a pre-obtained correspondence between an indicator parameter of a node of a sub-IVR flow and an optimization solution, an optimization solution that is in the optimization solution set and that corresponds to a value of an indicator parameter of the target node of the target sub-IVR flow as the target optimization solution.

8. The method according to claim 7, wherein the determining the optimization solution that is in the optimization solution set and that corresponds to the value of the indicator parameter of the target node of the target sub-IVR flow as the target optimization solution comprises:
determining at least one optimization solution that is in the optimization solution set and that corresponds to the value of the indicator parameter of the target node of the target sub-IVR flow as a candidate solution, and displaying each candidate solution; and
determining the target optimization solution based on a candidate solution selected by a user or a candidate solution modified by a user.

9. The method according to claim 7, wherein the correspondence between the indicator parameter of the node of the sub-IVR flow and the optimization solution is obtained based on a trained optimization solution library model, and the optimization solution library model is used to determine, based on a value of an input indicator parameter of a node of a sub-IVR flow, an optimization solution corresponding to the value of the input indicator parameter of the node of the sub-IVR flow.

10. The method according to claim 1, wherein the determining the target sub-IVR flow from the sub-IVR flows based on the value of each service parameter and the reference value corresponding to each service parameter comprises:
for each sub-IVR flow, collecting a difference between a value of each service parameter of the sub-IVR flow and a reference value of the corresponding service parameter, and collecting a weighted value between a preset weight of each service parameter of the sub-IVR flow and the corresponding difference; and
determining the target sub-IVR flow from the sub-IVR flows based on the weighted value of each sub-IVR flow and a reference weighted value between the reference value and the preset weight of each service parameter.

11. The method according to any one of claims 1 to 10, further comprising:
performing a comparative test on an optimized target sub-IVR flow and the target sub-IVR flow before optimization, and if a value of a service parameter of the optimized target sub-IVR flow is worse than a value of a service parameter of the target sub-IVR flow before optimization in a test result, restoring a currently used target sub-IVR flow to the target sub-IVR flow before optimization; or
if a value of a service parameter of the optimized target sub-IVR flow is better than a value of a service parameter of the target sub-IVR flow before optimization in a test result, using the optimized target sub-IVR flow.

12. The method according to claim 11, further comprising:
obtaining a reference association relationship coefficient between an indicator parameter of each node in the target sub-IVR flow and each service parameter of the target sub-IVR flow based on a value of a service parameter and a value of an indicator parameter of a node that correspond to each of the optimized target sub-IVR flow and the target sub-IVR flow before optimization and that are comprised in the test result; and
optimizing and updating the obtained association relationship between the service parameter of the sub-IVR flow and the indicator parameter of the node based on the reference association relationship coefficient.

13. The method according to claim 11, further comprising:
optimizing and updating the obtained correspondence between the indicator parameter of the node of the sub-IVR flow and the optimization solution based on the test result.

14. A flow optimization apparatus, wherein the apparatus comprises a flow optimization module, wherein
the flow optimization module is configured to: obtain a value of at least one service parameter of each sub-interactive voice response IVR flow in an IVR flow in a target period, and determine a target sub-IVR flow from the sub-IVR flows based on a value of each service parameter and a reference value corresponding to each service parameter; determine, from a plurality of nodes comprised in the target sub-IVR flow, a target node that is in the target sub-IVR flow and that is associated with the service parameter; select a target optimization solution from an optimization solution set, wherein the target optimization solution is used for optimizing the target node; and optimize the target sub-IVR flow based on the target optimization solution.

15. The apparatus according to claim 14, wherein the flow optimization module is configured to:
determine the target node based on a pre-obtained association relationship between a service parameter of a sub-IVR flow and an indicator parameter of a node.

16. The apparatus according to claim 15, wherein the flow optimization module is configured to:
obtain each association relationship coefficient based on the association relationship, wherein any association relationship coefficient represents association between any indicator parameter of each node comprised in the target sub-IVR flow and the service parameter; and determine the target node based on each association relationship coefficient.

17. The apparatus according to claim 16, wherein the flow optimization module is configured to:
obtain, based on each association relationship coefficient and a value of an indicator parameter of each node, a sorting ranking representing a degree of excellence of each node; and determine a specified quantity of target nodes from the nodes based on sorting rankings of the nodes.

18. The apparatus according to claim 17, wherein the flow optimization module is configured to:
for each indicator parameter, obtain, based on a value of each node in the indicator parameter, a sub-sorting ranking of each node in the indicator parameter; and obtain, based on each association relationship coefficient and the sub-sorting ranking of each node, the sorting ranking representing the degree of excellence of each node.

19. The apparatus according to claim 14, wherein the flow optimization module is configured to:
determine, based on a pre-obtained correspondence between an indicator parameter of a node of a sub-IVR flow and an optimization solution, an optimization solution that is in the optimization solution set and that corresponds to a value of an indicator parameter of the target node of the target sub-IVR flow as the target optimization solution.

20. The apparatus according to claim 19, wherein the flow optimization module is configured to:
determine at least one optimization solution that is in the optimization solution set and that corresponds to the value of the indicator parameter of the target node of the target sub-IVR flow as a candidate solution, and display each candidate solution; and determine the target optimization solution based on a candidate solution selected by a user or a candidate solution modified by a user.

21. The apparatus according to claim 14, wherein the flow optimization module is configured to:
for each sub-IVR flow, collect a difference between a value of each service parameter of the sub-IVR flow and a reference value of the corresponding service parameter, and collect a weighted value between a preset weight of each service parameter of the sub-IVR flow and the corresponding difference; and determine the target sub-IVR flow from the sub-IVR flows based on the weighted value of each sub-IVR flow and a reference weighted value between the reference value and the preset weight of each service parameter.

22. The apparatus according to any one of claims 14 to 21, wherein the flow optimization module is further configured to:
perform a comparative test on an optimized target sub-IVR flow and the target sub-IVR flow before optimization, and if a value of a service parameter of the optimized target sub-IVR flow is worse than a value of a service parameter of the target sub-IVR flow before optimization in a test result, restore a currently used target sub-IVR flow to the target sub-IVR flow before optimization; or if a value of a service parameter of the optimized target sub-IVR flow is better than a value of a service parameter of the target sub-IVR flow before optimization in a test result, use the optimized target sub-IVR flow.

23. The apparatus according to claim 22, wherein the flow optimization module is further configured to:
obtain a reference association relationship coefficient between an indicator parameter of each node in the target sub-IVR flow and each service parameter of the target sub-IVR flow based on a value of a service parameter and a value of an indicator parameter of a node that correspond to each of the optimized target sub-IVR flow and the target sub-IVR flow before optimization and that are comprised in the test result; and optimize and update the obtained association relationship between the service parameter of the sub-IVR flow and the indicator parameter of the node based on the reference association relationship coefficient.

24. The apparatus according to claim 22, wherein the flow optimization module is further configured to:
optimize and update the obtained correspondence between the indicator parameter of the node of the sub-IVR flow and the optimization solution based on the test result.

25. A computing device, wherein the computing device comprises a processor and a memory, and the processor is configured to invoke computer program instructions stored in the memory to perform the method according to any one of claims 1 to 13.
